(19) Europäisches Patentamt / European Patent Office / Office européen des brevets

(11) **EP 4 073 466 B1**

(12) **FASCICULE DE BREVET EUROPEEN**

(45) Date de publication et mention de la délivrance du brevet:
**09.07.2025 Bulletin 2025/28**

(21) Numéro de dépôt: **20816526.6**

(22) Date de dépôt: **07.12.2020**

(51) Classification Internationale des Brevets (IPC):
**G01C 21/16** $^{(2006.01)}$ **G06F 17/10** $^{(2006.01)}$
**G06N 20/10** $^{(2019.01)}$

(52) Classification Coopérative des Brevets (CPC):
**G01C 21/165; G06N 20/10**

(86) Numéro de dépôt international:
**PCT/EP2020/084829**

(87) Numéro de publication internationale:
**WO 2021/115998 (17.06.2021 Gazette 2021/24)**

(54) **FILTRAGE PARTICULAIRE ET CENTRALE DE NAVIGATION A CORRELATION DE MESURE**

TEILCHENFILTERUNGS- UND NAVIGATIONSSYSTEM UNTER VERWENDUNG VON MESSKORRELATION

PARTICLE FILTERING AND NAVIGATION SYSTEM USING MEASUREMENT CORRELATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2019 FR 1914349**

(43) Date de publication de la demande:
**19.10.2022 Bulletin 2022/42**

(73) Titulaire: **Office National d'Etudes et de Recherches Aérospatiales
91120 Palaiseau (FR)**

(72) Inventeurs:
• **MERLINGE, Nicolas
91120 PALAISEAU (FR)**
• **AUDEBERT, Clément
92600 ASNIERES (FR)**
• **DAHIA, Karim
91120 PALAISEAU (FR)**
• **HERISSE, Bruno
91120 PALAISEAU (FR)**
• **ALLARD, Jean-Michel
91120 PALAISEAU (FR)**

(74) Mandataire: **Hautier IP
20, rue de la Liberté
06000 Nice (FR)**

(56) Documents cités:
• **NICOLAS MERLINGE ET AL: "A Box Regularized Particle Filter for state estimation with severely ambiguous and non-linear measurements", AUTOMATICA, vol. 104, 12 March 2019 (2019-03-12), AMSTERDAM, NL, pages 102 - 110, XP055664432, ISSN: 0005-1098, DOI: 10.1016/ j.automatica.2019.02.033**

## Description

### Domaine technique

La présente invention concerne un procédé de filtrage particulaire, ainsi qu'une unité de calcul et une centrale de navigation à corrélation de mesure qui mettent en œuvre un tel procédé. Plus particulièrement, le procédé de filtrage particulaire est du type régularisé à boîtes.

### Technique antérieure

La fonction de navigation d'un aéronef inclut l'estimation de sa position instantanée, sa vitesse instantanée et son orientation instantanée, appelée attitude, dans le référentiel de navigation, aussi appelé trièdre géographique local. L'ensemble des valeurs instantanées des coordonnées de position, c'est-à-dire la latitude, la longitude et l'altitude de l'aéronef, de vitesse, comprenant une coordonnée de vitesse en direction du Nord, une coordonnée de vitesse en direction de l'Est et une coordonnée de vitesse de descente, et des angles d'attitude de l'aéronef, comprenant un angle de roulis, un angle de tangage et un angle de lacet, constitue l'état instantané du système formé par l'aéronef. L'aéronef peut être un avion, un drone ou tout porteur aérien autopropulsé, sans limitation.

L'accélération et la vitesse angulaire de l'aéronef sont mesurées répétitivement et à haute cadence chacune selon trois axes, par exemple à une fréquence de répétition d'environ 1000 Hz (Hertz), à l'aide d'accéléromètres et de gyromètres d'une centrale inertielle qui est à bord de l'aéronef. La centrale de navigation délivre alors des estimations des coordonnées de position et de vitesses, et des angles d'attitude de l'aéronef, par intégration des résultats des mesures accélérométriques et gyrométriques au cours du temps. Toutefois, chaque mesure d'accélération et de vitesse angulaire est affectée d'une erreur, qui est principalement composée d'un biais, d'un facteur d'échelle et d'un processus aléatoire, et l'accumulation des erreurs de mesure résulte en une erreur qui affecte l'estimation de l'état instantané de l'aéronef. Cette erreur sur l'état instantané qui est estimé croît en fonction du temps, et est couramment appelée dérive inertielle. Il est alors nécessaire d'associer la centrale inertielle à au moins un capteur additionnel, afin de corriger ou réduire la dérive inertielle.

Des méthodes usuelles pour corriger ou réduire la dérive inertielle consistent à utiliser des signaux de géolocalisation, tels que des signaux de navigation par satellite, par exemple de type GNSS, pour «global navigation satellite system» en anglais, ou d'utiliser des signaux qui sont produits par des balises situées au sol, par exemple des signaux de radionavigation ou de type GBAS, pour «ground-based augmentation system» ou système de renforcement au sol, ou encore de recevoir par radio une localisation de l'aéronef qui a été effectuée à l'aide d'un radar. Mais de telles méthodes sont sensibles à des brouillages ou à des leurres, à la disponibilité d'une couverture de la zone où se trouve l'aéronef en signaux de localisation ou en communication, etc. Il est alors souhaitable dans certaines circonstances de disposer à bord de l'aéronef d'une méthode qui soit autonome pour corriger et/ou réduire la dérive inertielle. Pour cela, il est courant d'associer à la centrale inertielle une sonde télémétrique, qui mesure une distance entre l'aéronef et le sol. Cette sonde télémétrique peut être un radio-altimètre, un télémètre laser, etc. sans limitation. Elle mesure la distance entre l'aéronef et le sol selon une direction qui peut être fixe ou non par rapport à l'aéronef. Lorsque cette direction de mesure de distance peut être variable, son orientation par rapport à l'aéronef est connue. La centrale inertielle est alors aussi associée à une unité de calcul qui corrèle des résultats de mesures successives qui sont effectuées par la sonde télémétrique avec l'état instantané de l'aéronef tel qu'estimé par la centrale inertielle. Plus précisément, une caractérisation de la zone qui est survolée par l'aéronef est stockée à bord de l'aéronef, par exemple sous forme d'une carte de relief qui associe une valeur de hauteur de relief à chaque couple de valeurs de latitude et de longitude. Un tel enregistrement de carte de relief peut être sous la forme d'une table, avec la latitude et la longitude qui constituent les entrées de la table, et les valeurs de hauteur du relief qui constituent les réponses de lecture dans la table. Alternativement, la caractérisation de la zone survolée peut être stockée sous forme d'une fonction analytique qui permet de calculer les valeurs de hauteur de relief en fonction des valeurs de latitude ou de longitude, ou sous toute autre forme appropriée. Alors, à chaque nouvelle estimation de la position instantanée de l'aéronef qui est produite par la centrale de navigation, une valeur de la distance qui devrait exister entre l'aéronef et le sol est obtenue en interrogeant la caractérisation de la zone survolée telle que stockée à bord de l'aéronef, conformément à la position estimée de l'aéronef. Eventuellement, la valeur de distance aéronef-sol peut résulter d'un calcul qui combine la position estimée de l'aéronef avec le(s) résultat(s) d'une ou plusieurs interrogation(s) de la caractérisation de la zone survolée qui est stockée à bord de l'aéronef, notamment lorsque la direction de mesure de la sonde télémétrique est oblique par rapport à l'axe d'altitude. Un tel calcul est connu de l'Homme du métier, si bien qu'il n'est pas utile de le répéter ici. La valeur de distance aéronef-sol qui est ainsi estimée est ensuite comparée avec le résultat de mesure qui est délivré par la sonde télémétrique. Une telle méthode de navigation avec corrélation de mesure est couramment appelée navigation avec corrélation de terrain. Plusieurs variantes en ont été proposées, mais certaines d'entre elles présentent une grande sensibilité à l'existence de non-linéarités des profils de terrain. Autrement dit, elles présentent l'inconvénient d'un manque de robustesse dans leur efficacité de convergence vers l'état vrai de l'aéronef, en fonction des profils de terrain possibles.

Les méthodes de navigation à corrélation de terrain qui sont basées sur un filtre particulaire régularisé à boîtes, ou BRPF pour «Box Regularized Particle Filter» en anglais, permettent de corriger la dérive inertielle avec une robustesse plus grande, compatible avec l'existence de non-linéarités et d'ambiguïtés de terrain. L'article de Merlinge, N., Dahia, K., Piet-Lahanier, H., Brusey, J., & Horri, N. qui est intitulé «A Box Regularized Particle Filter for state estimation with severely ambiguous and non-linear measurements», Automatica (2019), Vol. 104, pp. 102-110, décrit une telle méthode. Chacune de ces méthodes consiste encore à calculer itérativement un état instantané de l'aéronef à partir d'un dernier état déterminé antérieurement, et à corréler le résultat de mesure de distance qui est obtenu par la sonde télémétrique avec une valeur de distance qui est reconstituée par ailleurs à partir de la caractérisation du relief terrestre embarquée à bord de l'aéronef et des valeurs de position et d'attitude. Mais, un filtre particulaire régularisé à boîtes procède en manipulant des intervalles d'état, de dimension neuf lorsque chaque état de l'aéronef est constitué par trois coordonnées de position, trois coordonnées de vitesse et trois angles d'attitude comme décrit plus haut. De plus, une valeur de poids à signification probabiliste est associée à chaque intervalle d'état : le poids de chaque intervalle d'état correspond à la probabilité pour que l'état vrai de l'aéronef se situe dans cet intervalle d'état. Toutefois, ces méthodes de navigation avec corrélation de terrain qui sont basées sur des filtres particulaires n'ont pas encore été mises en œuvre pour des aéronefs réels, à cause des ressources de calcul très importantes qui sont nécessaires. En effet, il est requis pour de nombreuses applications aéronautiques que le procédé de navigation à corrélation de terrain qui est utilisé puisse être mis en œuvre par une unité de calcul de type circuit à réseau de portes programmables, ou FGPA pour «Field-Programmable Gate Array» en anglais. Or les circuits de ce type ont des capacités qui sont encore trop limitées.

Or il est connu qu'une telle méthode par filtrage particulaire régularisé à boîtes fournit une meilleure caractérisation statistique de l'état vrai de l'aéronef si un brouillage aléatoire des intervalles d'état est ajouté, pour réduire des corrélations qui existent entre certains au moins des intervalles d'état tels que ces intervalles d'états résultent directement du filtrage particulaire. Ce brouillage aléatoire consiste en des modifications des bornes qui déterminent chaque intervalle d'état, ou de façon équivalente, des modifications qui sont appliquées aux valeurs centrales et longueurs d'intervalles qui déterminent chaque intervalle d'état selon toutes les coordonnées d'état. Il est aussi connu que le brouillage aléatoire qui est ainsi ajouté est mieux adapté à un tel procédé de filtrage particulaire lorsqu'il correspond à une fonction de densité de probabilité de type $f(x) = 3 \cdot (1 - x^2)/4$, appelée noyau d'Epanechnikov, où x est une variable aléatoire comprise entre -1 et 1, les valeurs -1 et 1 étant permises. Or générer des variables aléatoires selon un tel noyau d'Epanechnikov en limitant les ressources de calcul qui sont nécessaires est difficile.

**Problème technique**

A partir de cette situation, un but de la présente invention est de combiner un filtrage particulaire avec des brouillages aléatoires qui sont conformes chacun à un noyau d'Epanechnikov, tout en limitant les ressources de calcul nécessaires.

Un but complémentaire de l'invention est de fournir une telle combinaison qui puisse être mise en œuvre de façon autonome à bord d'un aéronef. Au-delà, l'invention a pour but de contribuer à ce qu'un procédé de filtrage particulaire régularisé à boîtes puisse être mis en œuvre par un circuit de type FPGA.

**Résumé de l'invention**

Pour atteindre l'un au moins de ces buts ou un autre, un premier aspect de l'invention propose un nouveau procédé de filtrage particulaire à boîtes pour prédire un état d'un système par un ensemble d'intervalles d'état avec des poids qui sont associés à ces intervalles d'états, de façon à former une distribution de probabilité qui caractérise l'état du système. Le système concerné peut être un véhicule terrestre, aérien, maritime ou spatial qui est muni d'une centrale de navigation à corrélation de mesure. Le procédé de l'invention comprend d'appliquer de façon répétitive une séquence d'étapes à l'ensemble d'intervalles d'état avec leurs poids associés pour actualiser ces intervalles d'état et poids. Cette séquence d'étapes comprend une étape dite de lissage, qui consiste à modifier au moins un des intervalles d'état en appliquant des modifications aléatoires à un ensemble de bornes d'intervalles, ou valeurs centrales et longueurs d'intervalles, qui déterminent cet intervalle d'état selon des coordonnées d'état du système. Selon l'invention, les modifications aléatoires relatives à chaque intervalle d'état à modifier, qui est identifié par un indice entier i, sont déterminées en exécutant les étapes suivantes :

- générer une première valeur aléatoire, notée $\beta_i$ et comprise entre 0 et 1, les valeurs 0 et 1 étant permises, selon une loi bêta de distribution statistique de premier paramètre égal à d et de second paramètre égal à 2, où d est un nombre des coordonnées d'état du système ;
- générer $2 \cdot d$ secondes valeurs aléatoires, notées $v_{k,i}$, chacune selon une loi normale de distribution statistique à valeur moyenne nulle et écart-type égal à l'unité, où k est un autre indice entier qui varie de 1 à $2 \cdot d$ et repère les bornes d'intervalles, ou valeurs centrales et longueurs d'intervalles, pour chaque intervalle d'état ;

- calculer un premier nombre, noté $\xi_i$, selon la première formule : $\xi_i = [\Sigma_{k=1 \text{ à } 2 \cdot d} (\nu_{k,i})^2]^{1/2}$ ;
- calculer un deuxième nombre, noté $\alpha_i$, selon la deuxième formule : $\alpha_i = \beta_i^{1/2}/\xi_i$ ; et
- calculer $2 \cdot d$ troisièmes nombres, notés $\varepsilon_{k,i}$, selon la troisième formule : $\varepsilon_{k,i} = \nu_{k,i} \cdot \alpha_i$. Alors, les modifications aléatoires qui sont appliquées à l'intervalle d'état i sont proportionnelles une-à-une aux troisièmes nombres $\varepsilon_{k,i}$, avec un coefficient de proportionnalité qui est non-nul et commun à ces modifications aléatoires.

Les troisièmes nombres $\varepsilon_{k,i}$ qui sont ainsi générés suivent une fonction de densité de probabilité du type noyau d'Epanechnikov. En outre, les étapes précitées peuvent facilement être exécutées de façon autonome par une unité de calcul, notamment de type FPGA, qui est embarquée à bord d'un véhicule sans communication avec des moyens de calcul externes.

De façon préférée, l'ensemble des bornes d'intervalles, ou valeurs centrales et longueurs d'intervalles, qui déterminent l'intervalle d'état i peut être modifié en exécutant les étapes suivantes :

- combiner les modifications aléatoires qui sont relatives à cet intervalle d'état i en utilisant une matrice carrée de dimension $2 \cdot d$, de façon à obtenir $2 \cdot d$ combinaisons de modifications aléatoires ; puis
- ajouter les combinaisons de modifications aléatoires qui sont ainsi obtenues une-à-une aux bornes d'intervalles, ou valeurs centrales et longueurs d'intervalles, de l'intervalle d'état i.

En outre, et de préférence, la matrice qui est utilisée pour combiner les modifications aléatoires peut être telle que le produit de cette matrice par sa transposée soit égal à une matrice moyenne de produits, où la matrice moyenne de produits est carrée de dimension $2 \cdot d$, et a pour coefficients des valeurs moyennes qui sont calculées sur tous les intervalles d'état, de produits des bornes d'intervalles, ou valeurs centrales et longueurs d'intervalles, prises par paires séparément pour chaque intervalle d'état.

Dans des modes de mise en œuvre préférés de l'invention, chaque première valeur aléatoire $\beta_i$ peut être générée en utilisant un algorithme qui combine :

- une génération de deux nombres aléatoires chacun selon une loi uniforme de distribution statistique ; et
- au moins un critère d'acceptation qui est basé sur les deux nombres aléatoires, tel que, si l'au moins un critère d'acceptation est satisfait, un premier des deux nombres aléatoires est utilisé pour calculer la première valeur $\beta_i$, sinon la génération des deux nombres aléatoires est recommencée.

Avantageusement, chacun des deux nombres aléatoires peut être généré en utilisant une méthode du type à registre à décalage avec rétroaction linéaire.

De tels modes de mise en œuvre permettent des exécutions du procédé de l'invention par une unité de calcul qui est autonome, tout en réduisant encore plus les ressources de calcul de cette unité. En outre, les premières valeurs $\beta_i$ qui sont ainsi générées assurent que le brouillage aléatoire qui est appliqué aux intervalles d'état soit conforme à un noyau d'Epachenikov. En particulier, l'algorithme de Cheng, connu de l'Homme du métier, peut être utilisé pour générer chaque première valeur $\beta_i$.

Indépendamment, chaque seconde valeur aléatoire $\nu_{k,i}$ peut être calculée comme une somme de plusieurs valeurs aléatoires initiales, chacune de ces valeurs aléatoires initiales étant générée selon une loi uniforme de distribution statistique. Dans ce cas, chaque valeur aléatoire initiale peut de même être générée en utilisant une méthode du type à registre à décalage avec rétroaction linéaire. De tels modes de génération des secondes valeurs aléatoires $\nu_{k,i}$ facilitent aussi des exécutions du procédé de l'invention par une unité de calcul qui est autonome, tout en réduisant encore les ressources de calcul de cette unité. En outre, les secondes valeurs $\nu_{k,i}$ qui sont ainsi générées assurent aussi que le brouillage aléatoire qui est appliqué aux intervalles d'état soit conforme à un noyau d'Epachenikov.

De façon particulièrement avantageuse, des estimations respectives de chaque premier nombre $\xi_i$ et/ou de chaque second nombre $\alpha_i$ peuvent être obtenues en utilisant au moins une fois les étapes suivantes, où X est un nombre variable positif ou nul et $\alpha$ est une valeur d'exposant égale à 2 ou 1/2 :

/a/ écrire le nombre X sous une forme $X = (1+m) \cdot 2^{ex}$, où ex est un nombre entier négatif, positif ou nul, et m est une mantisse comprise entre 0 et 1, la valeur 0 et étant permise, de sorte qu'une représentation binaire du nombre X soit : $I(X) = L \cdot (m + ex + B)$, où $L = 2^n$ avec n qui est un nombre de bits d'une écriture binaire de la mantisse m, et B est un nombre constant positif ou nul, appelé biais ;
/b/ calculer une représentation binaire de $X^\alpha$ sous la forme :
$I(X^\alpha) = \alpha \cdot I(X) + L \cdot (1 - \alpha) \cdot (B - \sigma)$, où $\sigma$ est un nombre constant dont la valeur est enregistrée ; et
/c/ obtenir l'estimation de la valeur de $X^\alpha$ à partir de la représentation binaire $I(X^\alpha)$.

Les étapes /a/-/c/ sont alors appliquées à $X = \Sigma_{k=1 \text{ à } 2 \cdot d} (\nu_{k,i})^2$ avec $\alpha = 1/2$, pour obtenir une estimation du premier

nombre $\xi_i$.

Les étapes /a/-/c/ peuvent optionnellement être appliquées préalablement à une valeur absolue de chaque seconde valeur aléatoire, selon X = $|v_{k,i}|$, avec $\alpha=2$.

Les étapes /a/-/c/ peuvent en plus être appliquées à X = $\beta_i$ avec $\alpha=1/2$, pour obtenir une estimation du deuxième nombre $\alpha_i$ comme un résultat d'une division de l'estimation de $\beta_i^{1/2}$ qui est ainsi obtenue par l'estimation du premier nombre $\xi_i$.

De tels calculs, qui remplacent à chaque fois l'estimation de la fonction de $X^\alpha$ par un calcul basé sur la représentation binaire du nombre X, sont particulièrement économiques en ressources de calculs, et courts en temps de calcul. En outre, ils peuvent encore être réalisés par un circuit du type FPGA.

Dans ces mises en œuvre avantageuses de l'invention qui utilisent des représentations binaires des nombres, une au moins des caractéristiques additionnelles suivantes peut être reproduite, seule ou en combinaison de plusieurs d'entre elles :

- le nombre n des bits de l'écriture binaire de la mantisse m peut être égal à 23, et le biais B peut être égal à 127 ;
- le nombre constant $\sigma$ peut être compris entre 0 et 1, de préférence compris entre 0 et 0,5 ; et
- l'obtention de l'estimation de la valeur de $X^\alpha$ peut être complétée en exécutant au moins une fois l'étape supplémentaire suivante, après l'étape /c/ :
  /d/ calculer une nouvelle estimation de la valeur de $X^\alpha$ à partir d'une estimation antérieure de la valeur de $X^\alpha$, en appliquant un algorithme récursif de résolution approchée d'équation à l'équation $Y^{1/\alpha} - X = 0$ d'inconnue Y, l'estimation de la valeur de $X^\alpha$ qui a été obtenue à l'étape /c/ étant utilisée comme estimation antérieure pour une première application de l'algorithme, et la nouvelle estimation de la valeur de $X^\alpha$ qui est produite par une $q^{ième}$ application de l'algorithme formant l'estimation antérieure de la valeur de $X^\alpha$ pour la $(q+1)^{ième}$ application de l'algorithme, si une telle $(q+1)^{ième}$ application de l'algorithme est effectuée, q étant un nombre entier supérieur ou égal à 1.

Par exemple, l'algorithme récursif de résolution approchée d'équation qui est utilisé à l'étape /d/ peut être la méthode de Newton.

De façon générale pour l'invention, la séquence d'étapes qui est appliquée de façon répétitive pour actualiser les intervalles d'état avec les poids qui leur sont associés peut comprendre les étapes /1/ à /5/ suivantes :

/1/ une étape de prédiction, comprenant de prédire des intervalles d'état ultérieurs, chaque intervalle d'état ultérieur étant obtenu en appliquant au moins une règle de propagation à un d'une pluralité d'intervalles d'état antérieurs ;
/2/ une étape de mesure d'un état vrai du système ;
/3/ une étape de contraction de l'un au moins des intervalles d'état ultérieurs, en fonction d'au moins un résultat de mesure de l'état vrai qui a été obtenu à l'étape /2/ ;
/4/ une étape de mise-à-jour de poids, comprenant d'affecter un poids à chaque intervalle d'état ultérieur en fonction d'une taille de cet intervalle d'état ultérieur tel que résultant de l'étape /3/, d'une taille de l'intervalle d'état ultérieur tel que résultant de l'étape /1/ avant l'étape /3/, et d'un poids de l'intervalle d'état antérieur dont a résulté l'intervalle d'état ultérieur lors de l'étape /1/ ; et
/5/ une étape de redistribution des intervalles d'état, comprenant de remplacer au moins un des intervalles d'état ultérieurs par plusieurs sous-intervalles qui résultent d'une division de l'intervalle d'état ultérieur, chaque sous-intervalle formant un nouvel intervalle d'état, cette étape de redistribution comprenant d'appliquer l'étape de lissage au moins à chaque nouvel intervalle d'état.

Alors, les intervalles d'état tels que résultant d'une exécution de la séquence des étapes /1/-/5/, comprenant les nouveaux intervalles d'état et des intervalles d'état ultérieurs qui ont été maintenus sans être remplacés par plusieurs nouveaux intervalles d'état, dont éventuellement certains intervalles d'état auxquels l'étape de lissage peut ne pas avoir été appliquée, constituent les intervalles d'état antérieurs pour une exécution suivante de la séquence des étapes /1/ à /5/.

Un deuxième aspect de l'invention propose une unité de calcul, cette unité de calcul comprenant au moins une première entrée qui est adaptée pour recevoir des résultats de mesures répétées d'accélération et de vitesse angulaire d'un système, et une seconde entrée qui est adaptée pour recevoir des résultats de mesures répétées d'un état vrai du système, supplémentaires par rapport aux mesures d'accélération et de vitesse angulaire. L'unité de calcul est alors agencée pour exécuter un procédé de filtrage particulaire régularisé à boîtes qui est conforme au premier aspect de l'invention. De cette façon, l'unité de calcul produit en sortie une série d'intervalles d'état avec des poids respectifs, le poids qui est associé à chacun des intervalles d'état correspondant à une valeur de probabilité pour que l'état vrai du système soit dans cet intervalle d'état.

Une telle unité de calcul peut être de l'un des types suivants :

- circuit à réseau de portes programmables, ou FPGA,
- circuit à réseau de portes fixes, connu sous l'acronyme DSP pour «Digital Signal Processor» en anglais, et
- processeur d'unité centrale, connu sous les acronymes CPU pour «Computer Processing Unit» ou RISC pour «Reduced Instruction set Computer».

Un troisième aspect de l'invention concerne une centrale de navigation à corrélation de mesure, qui est adaptée pour être embarquée à bord d'un véhicule et qui comprend :

- une centrale inertielle, qui est adaptée pour mesurer itérativement des accélérations et des vitesses angulaires du véhicule, et pour déduire en utilisant des résultats de mesures des accélérations et des vitesses angulaires, des intervalles d'état ultérieurs respectivement à partir de plusieurs intervalles d'état antérieurs, chaque état du véhicule comprenant des coordonnées de position, de vitesse et d'attitude de ce véhicule ;
- un système de mesure, qui est adapté pour mesurer itérativement au moins une caractéristique d'un état vrai du véhicule ; et
- une unité de calcul qui est conforme au deuxième aspect de l'invention, et qui est adaptée pour réduire au moins une dérive de position, de vitesse et/ou d'attitude de la centrale inertielle, en utilisant les résultats de mesure de la caractéristique de l'état vrai du véhicule qui sont délivrés par le système de mesure.

Enfin, un quatrième aspect de l'invention propose un véhicule qui comprend une centrale de navigation à corrélation de mesure conforme au troisième aspect de l'invention. Un tel véhicule peut être un aéronef, notamment un avion, un drone volant ou tout porteur aérien autopropulsé, ou un véhicule capable de se déplacer sur un sol, notamment un drone mobile sur sol, ou un navire, un sous-marin, un engin spatial, notamment une sonde spatiale, un satellite, etc. sans limitation. Selon le cas, le système de mesure peut être une sonde télémétrique qui est destinée à mesurer une distance entre le véhicule et un point de sol, un système de repérage d'amères ou d'étoiles, un sonar pour mesurer une hauteur d'eau sous le navire ou le sous-marin, etc.

**Brève description des figures**

Les caractéristiques et avantages de la présente invention apparaîtront plus clairement dans la description détaillée ci-après d'exemples de mise en œuvre non-limitatifs, en référence aux figures annexées parmi lesquelles :

[Fig. 1] montre un aéronef qui est équipé d'une centrale inertielle à corrélation de terrain conforme à l'invention ;
[Fig. 2] est un diagramme qui montre l'enchaînement d'étapes d'un procédé conforme à l'invention ;
[Fig. 3] est un diagramme qui détaille l'exécution d'une étape de lissage conforme à l'invention ; et
[Fig. 4] est un organigramme d'un algorithme qui peut être utilisé pour mettre en œuvre l'invention.

**Description détaillée de l'invention**

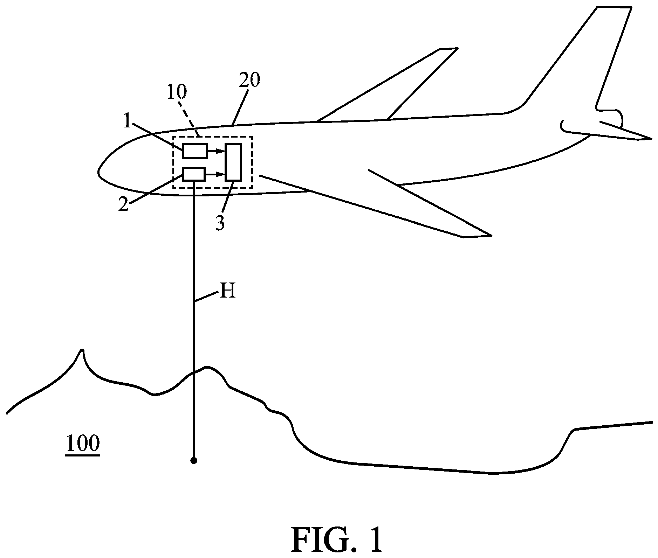

Pour raison de clarté, les dimensions des éléments qui sont représentés symboliquement dans [Fig. 1] ne correspondent ni à des dimensions réelles, ni à des rapports de dimensions réels. En outre, l'invention est décrite à titre d'exemple non-limitatif pour un cas d'application à un aéronef, mais il est entendu qu'elle peut être appliquée à tout véhicule qui est muni d'une centrale de navigation à corrélation de mesure, que ce véhicule soit terrestre, aérien, maritime, spatial, etc.

Un mode de calcul d'une estimation de la valeur de $X^\alpha$ qui peut être utilisé dans l'invention est décrit dans un premier temps. X est un nombre de valeur variable positif ou nul, et $\alpha$ désigne un exposant qui peut être égal à 2 ou 1/2.

De façon connue, le nombre X peut être écrit de façon unique sous la forme suivante, conformément à la norme IEEE 754 :

$$X = (1+m) \cdot 2^{ex},$$

où ex est un nombre entier positif ou nul, et m est une mantisse comprise entre 0 et 1, la valeur 0 étant aussi permise. Le nombre ex et la mantisse m dépendent ainsi de la valeur du nombre X.

Alors, on a :

$$\log_2 X = ex + m + \sigma,$$

où $\sigma$ est un nombre réel fixe permettant de minimiser une erreur sur la valeur de $\log_2 X$, notamment lorsqu'un intervalle numérique d'appartenance est connu a priori pour le nombre X. Par exemple, la valeur du nombre $\sigma$ peut être prise égale à 0,043036. Et donc :

$$ex + m = \log_2 X - \sigma.$$

Par ailleurs, le nombre X peut être représenté en forme binaire par I(X) défini par :

$$I(X) = L \cdot (m + ex + B),$$

où $L = 2^n$, avec n qui est un nombre de bits fixé pour écrire la mantisse m sous forme binaire, et B est un nombre constant positif ou nul, qui est appelé biais. Dans la représentation I(X) du nombre X, L, m, ex et B sont exprimés sous forme binaire. Par exemple, n peut être égal à 23, et B peut être égal à 127. En reportant dans la représentation binaire I(X) l'expression de ex + m telle que provenant de $\log_2 X$, il vient :

$$I(X) = L \cdot [\log_2 X - \sigma + B], \text{ soit : } \log_2 X = I(X)/L + \sigma - B.$$

Or, de la même façon que I(X) dans la ligne précédente, la représentation binaire de $X^\alpha$ est :

$$I(X^\alpha) = L \cdot [\log_2(X^\alpha) - \sigma + B]$$

Mais $\log_2(X^\alpha) = \alpha \cdot \log_2(X)$, donc : $I(X^\alpha) = L \cdot [\alpha \cdot \log_2(X) - \sigma + B]$, et en remplaçant $\log_2(X)$ par son expression en fonction de la représentation binaire I(X), il vient :

$$I(X^\alpha) = L \cdot [\alpha \cdot (I(X)/L + \sigma - B) - \sigma + B], \text{ soit : } I(X^\alpha) = \alpha \cdot I(X) + L \cdot (1 - \alpha) \cdot (B - \sigma).$$

Une valeur approchée de $X^\alpha$, notée $Y_0$, peut alors être reconstruite à la partir de la représentation binaire de $X^\alpha$ qui a été ainsi obtenue, en utilisant une méthode inverse de celle qui fournit la représentation binaire d'un nombre à partir de ce nombre. L'écart entre cette valeur approchée $Y_0$ et la vraie valeur de $X^\alpha$ dépend de la valeur qui a été adoptée pour le nombre $\sigma$. Pour de nombreuses applications, la valeur approchée $Y_0$ convient d'une manière satisfaisante pour remplacer $X^\alpha$, compte tenu de la simplicité du procédé d'obtention de cette valeur approchée $Y_0$, tel qu'il vient d'être décrit.

Pour le cas particulier où l'exposant $\alpha$ est égal à 2 :

$$I(X^2) = 2 \cdot I(X) - L \cdot (B - \sigma).$$

Pour le cas particulier où l'exposant $\alpha$ est égal à 1/2 :

$$I(X^{1/2}) = I(X)/2 + 0,5 \cdot L \cdot (B - \sigma).$$

Pour des applications où la valeur approchée $Y_0$ ne constitue pas une évaluation suffisamment précise de $X^\alpha$, il est possible d'améliorer cette évaluation en utilisant l'un des procédés d'affinage de valeurs approchées qui sont connus de l'Homme du métier. L'algorithme de Newton, aussi appelé méthode de Newton, peut être utilisé en particulier, en l'appliquant à la fonction $f(Y) = Y^{1/\alpha} - X$ et à l'équation $f(Y) = 0$. Des valeurs approchées successives $Y_q$, q étant un indice entier de numérotation de ces valeurs, peuvent ainsi être obtenues selon la formule : $Y_{q+1} = Y_q - f(Y_q)/f'(Y_q)$, où $f'(Y_q)$ est la valeur de la fonction dérivée de f, estimée pour la valeur $Y_q$. C'est-à-dire, en calculant l'expression de $f'(Y)$ à partir de celle de $f(Y)$ :

$$Y_{q+1} = (1 - \alpha) \cdot Y_q + \alpha \cdot X \cdot Y_q^{(\alpha-1)/\alpha}, \text{ pour } q = 0, 1, 2, \ldots$$

Pour le cas particulier où l'exposant $\alpha$ est égal à 2, il vient :

$$Y_{q+1} = -Y_q + 2 \cdot X \cdot Y_q^{1/2}.$$

Notamment, la valeur approchée au premier ordre de $X^2$ est :

$$Y_1 = -Y_0 + 2 \cdot X \cdot Y_0^{1/2}.$$

La valeur de $Y_q^{1/2}$ peut être estimée chaque fois en utilisant la formule $I(X^\alpha) = \alpha \cdot I(X) + L \cdot (1 - \alpha) \cdot (B - \sigma)$, et en remplaçant dans cette formule X par $Y_q$ et $\alpha$ par 1/2.

Pour le cas particulier où l'exposant $\alpha$ est égal à 1/2, il vient :

$$Y_{q+1} = 0{,}5 \cdot Y_q + 0{,}5 \cdot X / Y_q.$$

Notamment, la valeur approchée au premier ordre de $X^{1/2}$ est :

$$Y_1 = 0{,}5 \cdot Y_0 + 0{,}5 \cdot X / Y_0.$$

La valeur approchée $Y_0$, telle qu'obtenue en utilisant les représentations binaires de nombres, et les valeurs $Y_q$, $q \geq 1$, telles qu'obtenues en utilisant l'un des procédés d'affinage de valeurs approchées tel que la méthode de Newton, ne nécessitent pas de ressources de calcul importantes. Elles peuvent donc être calculées facilement par une unité de calcul de type FPGA, DSP, CPU ou RISC.

Conformément à [Fig. 1], un aéronef 20 est équipé d'une centrale de navigation à corrélation de terrain, désignée par la référence 10. La centrale de navigation 10 comprend une centrale inertielle 1, une sonde télémétrique 2 et une unité de calcul 3. De façon connue, la centrale inertielle 1 réalise répétitivement des mesures de trois coordonnées d'accélération et de trois coordonnées de vitesse angulaire de l'aéronef 20, à l'aide d'accéléromètres et de gyromètres non-représentés. Par ailleurs, la sonde télémétrique 2 réalise répétitivement des mesures de la distance H qui existe entre le sol 100 et l'aéronef 20. Cette distance H est mesurée selon une direction qui peut être fixe par rapport à l'aéronef 20, par exemple perpendiculairement à un plan de référence de l'aéronef. Eventuellement, la direction de mesure télémétrique peut être variable par rapport à l'aéronef 20, mais dans un tel cas cette direction de mesure est contrôlée et prise en compte d'une façon adéquate, connue par ailleurs. La distance H varie donc en fonction du relief terrestre qui est survolé par l'aéronef 20, ainsi qu'en fonction de son altitude et de son attitude. Dans la suite, la présente description est limitée au seul cas où les mesures supplémentaires par rapport à celles de la centrale inertielle 1 sont constituées par les mesures de la distance H. Ce cas correspond à une navigation avec corrélation de terrain. Toutefois, il est entendu que d'autres mesures supplémentaires peuvent être utilisées alternativement à celles de la distance H, ou en complément de celles-ci. Enfin, l'invention est compatible avec des modèles de centrale inertielle et de sonde télémétrique tels que disponibles commercialement. En particulier, la centrale inertielle peut être d'un type à MEMS, pour «Micro-Electro-Mechanical System» en anglais, à quadrason, à gyrolaser, etc., et la sonde télémétrique peut être un radio-altimètre, un télémètre laser, etc.

Chaque état possible pour l'aéronef 20 peut être composé de trois valeurs de coordonnées spatiales qui identifient une position pour l'aéronef, par exemple dans le référentiel terrestre, trois valeurs de vitesses chacune selon une des coordonnées spatiales, et trois valeurs angulaires pour identifier une orientation de l'aéronef, par exemple trois valeurs d'angles d'Euler, pour un total de neuf coordonnées d'état. Dans ces conditions, un intervalle d'état pour l'aéronef 20 est formé par une combinaison de neuf intervalles unidimensionnels qui sont relatifs chacun séparément à l'une des coordonnées d'état. Un tel intervalle d'état est appelé boîte dans le jargon de l'Homme du métier.

Le procédé de filtrage particulaire régularisé à boîtes est initialisé par la fourniture de plusieurs intervalles d'état initiaux, chacun associé à un poids qui indique une valeur de probabilité pour que l'état vrai de l'aéronef 20 se trouve initialement dans cet intervalle d'état initial. Ainsi, N intervalles d'état initiaux sont fournis, N étant un nombre entier, par exemple égal à 16 ou 32, de préférence inférieur ou égal à 128. Chaque intervalle d'état initial est associé individuellement à une valeur de poids, qui peut être égale à 1/N.

Le procédé est ensuite constitué par des itérations successives d'une séquence d'étapes, chaque nouvelle exécution de la séquence d'étapes produisant une actualisation des intervalles d'état, avec des valeurs actualisées de poids qui sont associées une-à-un aux intervalles d'état actualisés. En outre, chaque nouvelle exécution de la séquence d'étapes est effectuée à partir des intervalles d'état et leurs valeurs de poids associées tels que fournis par l'exécution juste antérieure de la séquence d'étapes.

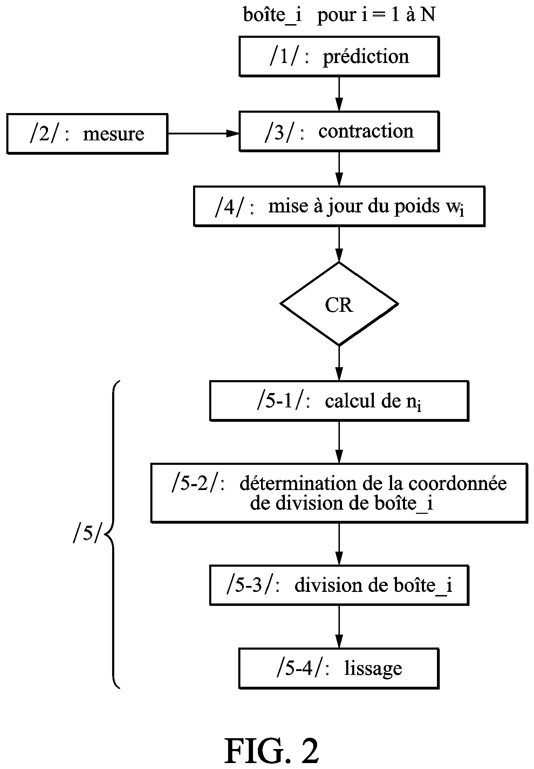

Chaque séquence d'étapes comprend une étape de prédiction, notée /1/ dans [Fig. 2], une étape de mesure notée /2/, une étape de contraction notée /3/, une étape /4/ de mise-à-jour du poids de chaque intervalle d'état, et une étape /5/ de redistribution des intervalles d'état. Les étapes /1/ et /3/ à /5/ sont exécutées pour chaque intervalle d'état. Etant donné que l'étape /5/ produit une redistribution des intervalles d'état tels que résultant de l'étape /3/, elle est de préférence exécutée de façon à conserver un nombre constant d'intervalles d'état. Alors l'unité de calcul 3 peut être conçue et dimensionnée pour traiter N intervalles d'état à chaque exécution de la séquence des étapes /1/ à /5/. i est un indice entier, de 1 à N, qui numérote les intervalles d'état qui sont traités à chaque itération de cette séquence des étapes /1/ à /5/.

Pour chaque intervalle d'état i, noté boîte_i, l'étape de prédiction /1/ consiste à recueillir les résultats de dernières mesures d'accélération et de vitesse angulaire, tels que délivrés par la centrale inertielle 1. Eventuellement, les résultats de plusieurs mesures qui ont été effectuées par la centrale inertielle 1 depuis l'exécution précédente de la séquence des étapes /1/ à /5/ peuvent être recueillis. Pour chacun des intervalles d'état boîte_i, cette étape /1/ comprend aussi de calculer une évolution de cet intervalle d'état pendant la période de temps qui s'est écoulée entre les deux exécutions de l'étape /1/, relatives à l'itération précédente et la nouvelle itération en cours de la séquence des étapes /1/ à /5/. Le principe de calcul d'une telle évolution de chaque intervalle d'état boîte_i, à partir des résultats des mesures d'accélération et de vitesse angulaire, est supposé connu de l'Homme du métier. On pourra se référer à ce sujet à l'article de Merlinge, N., Dahia, K., Piet-Lahanier, H., Brusey, J., & Horri, N. qui est intitulé «A Box Regularized Particle Filter for state estimation with severely ambiguous and non-linear measurements», Automatica (2019), Vol. 104, pp. 102-110. Cette étape /1/ aboutit à une translation, accompagnée le plus souvent d'un changement de longueur, de chaque intervalle unidimensionnel qui est relatif à l'une des coordonnées d'état de l'aéronef 20. Dans la partie générale de la présente description, chaque intervalle d'état boîte_i tel qu'existant au moment de débuter l'exécution de l'étape /1/ a été appelé intervalle d'état antérieur, et cet intervalle d'état boîte_i tel que modifié par l'étape /1/ a été appelé intervalle d'état ultérieur.

L'étape de mesure /2/ consiste à recueillir le résultat de la dernière mesure de distance H tel que délivré par la sonde télémétrique 2. Eventuellement, les résultats de plusieurs dernières mesures qui ont été effectuées par la sonde télémétrique 2 depuis l'exécution précédente de l'étape /2/, lors de l'itération précédente de la séquence des étapes /1/ à /5/, peuvent être recueillis.

L'étape de contraction /3/ consiste à réduire la taille de chaque intervalle d'état boîte_i en fonction d'incompatibilités qui existeraient entre des parties de cet intervalle d'état et le ou les dernier(s) résultat(s) de mesure de distance H recueillis à l'étape /2/. Typiquement, les six coordonnées de position et d'attitude de l'aéronef 20, telles que pouvant varier à l'intérieur de chaque intervalle d'état boîte_i résultant de l'étape /1/, sont combinées à des valeurs de hauteur de relief lues dans une carte de terrain qui est mémorisée, afin d'obtenir une estimation de la distance H associée à chaque état. Un tel calcul peut être effectué de la façon connue qui a été rappelée au début de cette description. La distance H ainsi estimée est comparée au résultat de la mesure de l'étape /2/. De façon générale, une équation implicite peut être mise en œuvre pour convertir chaque état de l'aéronef 20 en une valeur de distance H, en utilisant la carte de terrain mémorisée. Mais une telle équation, appelée équation d'observation par l'Homme du métier, peut être difficile à inverser localement, si bien que modéliser sa fonction inverse par une partie de fonction analytique et une partie de fonction tabulée peut être avantageux. L'Homme du métier pourra encore se reporter à l'article de Merlinge et al., Automatica 104(2019), cité plus haut, au sujet de l'étape /3/ qui n'est pas directement concernée par l'amélioration du procédé que procure l'invention.

L'étape de mise-à-jour /4/ consiste à mettre à jour la valeur du poids de chaque intervalle d'état tel que résultant de l'étape /3/. Par exemple, une nouvelle valeur du poids de l'intervalle d'état boîte_i peut être égale à la valeur du poids de cet intervalle d'état boîte_i telle qu'existant avant d'effectuer cette mise-à-jour, multipliée par la taille de l'intervalle d'état boîte_i tel que résultant de l'étape de contraction /3/, et divisée par la taille de l'intervalle d'état boîte_i tel que résultant de l'étape de prédiction /1/ avant d'appliquer l'étape de contraction /3/. D'autres formules de mise-à-jour des valeurs de poids peuvent être adoptées alternativement. Eventuellement, les valeurs de poids telles que résultant de l'une de ces formules peuvent en plus être corrigées, par exemple en les multipliant par un facteur commun non-nul, pour assurer que leur somme soit égale à l'unité.

L'étape /5/ a pour but de redistribuer les intervalles d'état tels que résultant de l'étape /3/, pour obtenir une meilleure représentativité statistique des états qui sont possibles pour l'aéronef 20. L'exécution de cette étape /5/ peut être soumise au résultat d'un test optionnel désigné par CR dans [Fig. 2]. Ce test consiste à déterminer si un critère de représentativité est satisfait par les intervalles d'état avec leurs valeurs de poids respectives. Il porte sur toutes les valeurs des poids $w_i$ telles qu'actualisées à l'étape /4/, où $w_i$ est le poids qui est associé à l'intervalle d'état boîte_i. Un premier critère de représentativité qui peut être utilisé est celui connu sous l'appellation de critère N-efficace. Ce critère est satisfait si $(\sum_{i=1...N} w_i^2)^{-1} < \theta_{eff} \cdot N$, où $\theta_{eff}$ est un paramètre d'ajustement du critère N-efficace, compris entre 0 et 1. Un autre critère de représentativité aussi possible est celui qui est connu sous l'appellation de critère entropique : il est satisfait si $\log(N) + \sum_{i=1...N} w_i \cdot \log(w_i) > \theta_{ent} \cdot N$, où $\theta_{ent}$ est un paramètre d'ajustement du critère entropique, compris entre 0 et 1. Mais d'autres critères de représentativité qui sont aussi connus de l'Homme du métier peuvent encore être utilisés alternativement. L'étape /5/ de redistribution des intervalles d'état est alors appliquée si le critère de représentativité n'est pas satisfait.

L'étape /5/ comprend d'abord de déterminer un nombre de division $n_i$ qui est attribué à l'intervalle d'état boîte_i, avec l'indice i qui numérote encore les intervalles d'état de 1 à N. Cette sous-étape est notée /5-1/ dans [Fig. 2]. De façon connue, elle peut être exécutée en utilisant une méthode de tirage multinomial. Une telle méthode consiste à tirer des points aléatoirement et répétitivement à l'intérieur d'un segment unidimensionnel, pour déterminer le nombre $n_i$ des sous-intervalles qui sont destinés à remplacer l'intervalle d'état boîte_i, en fonction des valeurs des poids $w_i$ de tous les intervalles d'état telles que mises-à-jour à l'étape /4/. Le segment de tirage est constitué par une juxtaposition de segments élémentaires, dont les longueurs individuelles correspondent une-à-une aux valeurs des poids des intervalles d'état. Le nombre $n_i$ des sous-intervalles qui remplaceront l'intervalle d'état boîte_i est alors proportionnel au nombre de points tirés aléatoirement qui appartiennent au segment élémentaire dont la longueur est égale à la valeur de poids de l'intervalle d'état boîte_i. Si la valeur de $n_i$ qui est ainsi déterminée pour l'un des intervalles d'état est nulle, cet intervalle d'état est supprimé, sinon l'intervalle d'état boîte_i est divisé en $n_i$ sous-intervalles, la valeur obtenue pour $n_i$ étant statistiquement d'autant plus grande que le poids de l'intervalle d'état boîte_i tel que résultant de l'étape /4/ est élevé. Eventuellement, les valeurs de $n_i$ qui sont ainsi obtenues peuvent être multipliées par un facteur constant et arrondies, afin de limiter le nombre total des sous-intervalles mis en œuvre, et/ou assurer que la somme de toutes les valeurs de $n_i$ est égale à N. Toutefois, cette façon d'exécuter la sous-étape /5-1/ n'est donnée qu'à titre d'exemple, et des méthodes différentes peuvent être utilisées alternativement dans des variantes de mise en œuvre de l'invention.

Chaque intervalle d'état boîte_i est alors destiné à être divisé en $n_i$ sous-intervalles, à la sous-étape /5-3/, par exemple de l'une des façons qui sont décrites dans les articles suivants :

«An introduction to box particle filtering [lecture notes]» de Gning, A., Ristic, B., Mihaylova, L., & Abdallah, F., IEEE Signal Processing Magazine (2013), Vol. 30(4), pp. 166-171 ; et
«A Box Regularized Particle Filter for state estimation with severely ambiguous and non-linear measurements» de Merlinge, N., Dahia, K., Piet-Lahanier, H., Brusey, J., & Horri, N., Automatica (2019), Vol. 104, pp. 102-110, déjà cité plus haut.

Ces méthodes de division consistent à déterminer d'abord celle des coordonnées d'état du système, selon laquelle l'intervalle d'état boîte_i est le plus étendu. Cette détermination est l'objet de la sous-étape /5-2/ qui est décrite maintenant.

Chacun des intervalles d'état boîte_i concerne plusieurs coordonnées d'état d'au moins deux types différents. Par exemple, dans le cas de la centrale de navigation 10 qui a été décrite plus haut pour l'aéronef 20, les trois coordonnées de position, notées $x_1$, $x_2$ et $x_3$, sont des coordonnées d'état d'un premier type, les trois vitesses, notées $v_1$, $v_2$ et $v_3$, sont des coordonnées d'état d'un deuxième type, et les trois angles d'attitude, notés $\theta_1$, $\theta_2$ et $\theta_3$, de l'aéronef 20 sont des coordonnées d'état d'un troisième type. Alors, des valeurs normalisées et sans dimension des longueurs des intervalles unidimensionnels de l'intervalle d'état boîte_i, selon chacune des coordonnées d'état, sont :

$$\Delta x_{j\_n} = \Delta x_j \cdot (\Delta x_1^2 + \Delta x_2^2 + \Delta x_3^2)^{-1/2},$$

$$\Delta v_{j\_n} = \Delta v_j \cdot (\Delta v_1^2 + \Delta v_2^2 + \Delta v_3^2)^{-1/2},$$

et

$$\Delta \theta_{j\_n} = \Delta \theta_j \cdot (\Delta \theta_1^2 + \Delta \theta_2^2 + \Delta \theta_3^2)^{-1/2},$$

pour j=1, 2 et 3 dans chaque cas, où $\Delta x_j$, $\Delta v_j$ et $\Delta \theta_j$ sont les longueurs des intervalles unidimensionnels respectifs des neuf coordonnées d'état pour l'intervalle d'état boîte_i. Chacune des valeurs $\Delta x_j^2$, $\Delta v_j^2$ et $\Delta \theta_j^2$ peut être calculée en utilisant le procédé qui a été présenté plus haut pour $X^\alpha$, avec $\alpha$ égal à 2. Puis chacun des facteurs $(\Delta x_1^2 + \Delta x_2^2 + \Delta x_3^2)^{-1/2}$, $(\Delta v_1^2 + \Delta v_2^2 + \Delta v_3^2)^{-1/2}$ et $(\Delta \theta_1^2 + \Delta \theta_2^2 + \Delta \theta_3^2)^{-1/2}$ peut aussi être calculé en utilisant le même procédé, mais avec $\alpha$ qui est alors égal à -1/2. Les valeurs normalisées $\Delta x_{j\_n}$, $\Delta v_{j\_n}$ et $\Delta \theta_{j\_n}$ des longueurs des neufs intervalles unidimensionnels de l'intervalle d'état boîte_i sont alors obtenues selon les formules précédentes, par calcul de produits.

Ces valeurs normalisées $\Delta x_{j\_n}$, $\Delta v_{j\_n}$ et $\Delta \theta_{j\_n}$ peuvent être comparées entre elles, et la coordonnée d'état selon laquelle l'intervalle d'état boîte_i est le plus étendu est celle qui correspond à la plus grande des valeurs normalisées $\Delta x_{j\_n}$, $\Delta v_{j\_n}$ et $\Delta \theta_{j\_n}$, en considérant leurs valeurs absolues. Par exemple, l'intervalle d'état boîte_i est le plus étendu selon la coordonnée de position $x_1$ si $\Delta x_{1\_n}$ est la plus grande des valeurs normalisées $\Delta x_{j\_n}$, $\Delta v_{j\_n}$ et $\Delta \theta_{j\_n}$, ou bien il est le plus étendu selon la coordonnée de vitesse $v_2$ si $\Delta v_{2\_n}$ est la plus grande des neuf valeurs normalisées, etc.

A la sous-étape /5-3/, l'intervalle d'état boîte_i est divisé en $n_i$ sous-intervalles contigus, en divisant en $n_i$ segments de mêmes longueurs celui des intervalles unidimensionnels de boîte_i qui est le plus étendu, au sens des valeurs normalisées $\Delta x_{j\_n}$, $\Delta v_{j\_n}$ et $\Delta \theta_{j\_n}$. Chaque sous-intervalle possède donc l'un de ces segments pour intervalle unidimensionnel selon la coordonnée d'état qui correspond à l'extension maximale de l'intervalle d'état boîte_i, et les mêmes intervalles unidimensionnels que cet intervalle d'état boîte_i selon les autres coordonnées d'état. Les $n_i$ sous-intervalles qui sont ainsi construits constituent donc une partition de l'intervalle d'état boîte_i. Ils forment de nouveaux intervalles d'état à partir desquels le procédé de filtrage particulaire régularisé à boîtes est continué. Une valeur de poids est attribuée à chacun d'eux, qui est égale à celle de l'intervalle d'état boîte_i divisée par le nombre de division $n_i$. Ces nouveaux intervalles d'état, avec ceux des intervalles d'état qui n'ont pas été divisés, sont alors re-numérotés par l'indice i, avantageusement de 1 à N, pour la poursuite du procédé de filtrage.

Enfin, la sous-étape /5-4/, qui a été appelée étape de lissage dans la partie générale de la présente description, consiste à corriger les nouveaux intervalles d'état tels que résultant de la sous-étape /5-3/, afin qu'ils produisent, avec leurs valeurs de poids associées, une représentation statistique encore meilleure de l'état du système, c'est-à-dire de l'état de l'aéronef 20 pour l'exemple considéré. Une telle modification des intervalles d'état est aussi couramment appelée régularisation de la représentation statistique de l'état du système, dans le jargon de l'Homme du métier. Elle peut être appliquée non seulement aux nouveaux intervalles d'état qui ont résulté chacun d'une division d'un des intervalles d'état ultérieur, mais aussi à tous les intervalles d'état, y compris ceux qui n'ont pas été divisés. Des corrections qui sont appliquées pour cela aux intervalles d'état peuvent consister en des déplacements aléatoires des bornes des intervalles unidimensionnels qui constituent les arêtes de chaque intervalle d'état boîte_i. De préférence, les valeurs de poids respectives qui sont associées aux intervalles d'état ne sont pas modifiées dans cette sous-étape /5-4/. Pour l'invention, une méthode de lissage par noyau d'Epanechnikov est appliquée, notamment telle que décrite dans l'article de Merlinge et al., Automatica 104(2019), déjà cité.

De façon connue, le noyau d'Epanechnikov est défini par la fonction de densité de probabilité $f(x) = 3 \cdot (1 - x^2)/4$, où x est la variable aléatoire comprise entre -1 et 1, les valeurs -1 et 1 étant permises. Son espérance est nulle, et sa variance est égale à 1/5.

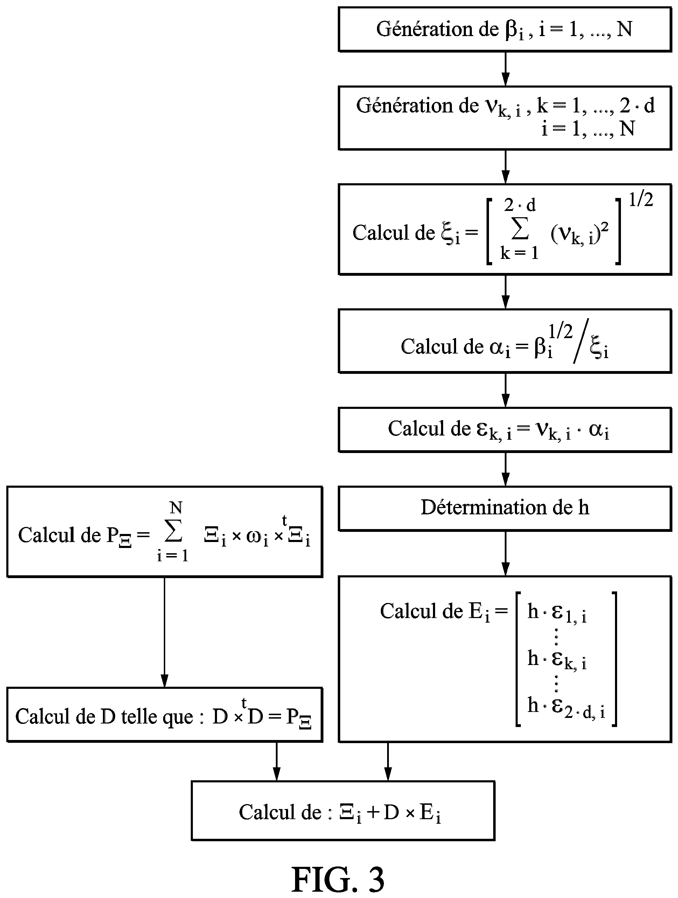

La sous-étape /5-4/ comprend donc en premier lieu de générer des corrections aléatoires à appliquer à chaque intervalle unidimensionnel de coordonnée d'état qui détermine chacun des intervalles d'état boîte_i, puis d'appliquer ces corrections. Une exécution détaillée de la sous-étape /5-4/ est montrée dans [Fig. 3].

On note d le nombre de coordonnées d'état du système considéré, et $d'=2 \cdot d$ le nombre de bornes qui déterminent chaque intervalle d'état de ce système, c'est-à-dire chaque boîte utilisée dans le procédé de filtrage particulaire régularisé. Dans le cas de l'aéronef 20, d=9 et d'=18.

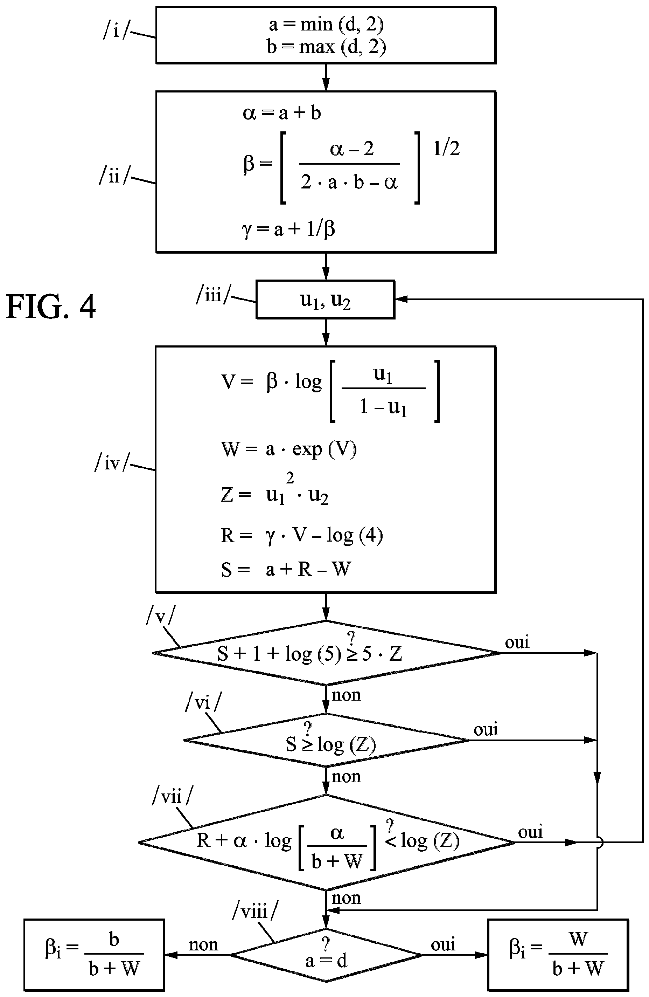

On génère d'abord N premières valeurs aléatoires, notées $\beta_i$ et comprise entre 0 et 1, les valeurs 0 et 1 étant permises, i étant l'indice entier de numérotation des intervalles d'état tel qu'utilisé précédemment, chacune selon une loi bêta de distribution statistique, de premier paramètre égal à d et de second paramètre égal à 2. De façon connue, la loi bêta dont les paramètres sont d et 2 est définie par la fonction de densité de probabilité $x^{d/2-1} \cdot (1-x) \cdot \Gamma(d/2 + 2)/[\Gamma(d/2) \cdot \Gamma(2)]$, où x désigne la variable aléatoire, et $\Gamma$ désigne la fonction gamma. Une façon possible de générer les valeurs $\beta_i$ conformément à la loi bêta utilise l'algorithme de Cheng qui sera rappelé plus loin, en référence à [Fig. 4].

On génère ensuite $N \cdot d'$ secondes valeurs aléatoires, notées $v_{k,i}$, i étant encore le même indice que précédemment et k étant un autre indice entier qui varie de 1 à d', chacune selon une loi normale de distribution statistique à valeur moyenne nulle et écart-type égal à l'unité, couramment appelée loi normale réduite. L'indice k dénombre les degrés de liberté dans la définition de chaque intervalle d'état. Il identifie deux bornes d'intervalle unidimensionnel pour chaque coordonnée d'état ou, de façon équivalente, une valeur centrale et une longueur d'intervalle pour chaque intervalle unidimensionnel de coordonnée d'état. De façon connue, la loi normale à valeur moyenne nulle et écart-type égal à l'unité est définie par la fonction de densité de probabilité $(1/\pi^{1/2}) \cdot \exp[-x^2/2]$, où x désigne encore la variable aléatoire, mais dans ce cas positive, nulle ou négative. Elle peut être simulée par une somme de valeurs aléatoires initiales qui sont générées chacune selon une loi uniforme de distribution statistique, et une telle loi uniforme de distribution statistique peut être produite par une méthode de type LFSR, pour «linear feedback shift register» en anglais, ou registre à décalage avec rétroaction linéaire en français, par exemple.

N premiers nombres, notés $\xi_i$, sont alors calculés à partir des valeurs aléatoires $v_{k,i}$ de la façon suivante : $\xi_i = [\Sigma_{k=1 \text{ à } d'} (v_{k,i})^2]^{1/2}$. Avantageusement, chacun de ces nombres $\xi_i$ peut être calculé en appliquant le procédé de calcul d'une estimation de $X^\alpha$ qui a été décrit plus haut, à $X = v_{k,i}$ avec $\alpha=2$, puis à $X = \Sigma_{k=1 \text{ à } d'} (v_{k,i})^2$ avec $\alpha=1/2$.

N deuxièmes nombres, notés $\alpha_i$, sont ensuite calculés selon la formule : $\alpha_i = \beta i^{1/2}/\xi_i$. Avantageusement, chacun de ces nombres $\alpha_i$ peut être calculé en appliquant de nouveau le procédé de calcul d'une estimation de $X^\alpha$ qui a été décrit plus haut, à $X = \beta_i$ avec $\alpha=1/2$.

Dans ces conditions, $N \cdot d'$ troisièmes nombres qui sont calculés de la façon suivante : $\varepsilon_{k,i} = v_{k,i} \cdot \alpha_i$, satisfont chacun la loi de distribution statistique d'Epanechnikov d'espérance nulle et de variance égale à 1/5.

Par ailleurs, une amplitude de bruit, notée h, est calculée de la façon suivante :

$$h = \mu \cdot A \cdot N^{-1/(d'+4)},$$

où $A = [8 \cdot c_{d'}^{-1} \cdot (d'+4) \cdot (2 \cdot \pi^{1/2})^{d'}]^{1/(d'+4)}$. Dans cette expression de A, $c_{d'}$ désigne le volume de l'hyper-sphère de dimension d' et de rayon unitaire, et $\mu$ est un paramètre d'ajustement qui est compris entre 0 et 1. De façon connue, $c_{d'} = \pi^{d'/2}/\Gamma(d'/2 + 1)$, où $\Gamma$ désigne encore la fonction gamma. La valeur de $c_{d'}$ peut soit être pré-calculée et stockée de façon à être disponible pour l'unité de calcul 3, soit être calculée par cette dernière, par exemple en utilisant une table préenregistrée de valeurs de la fonction gamma. Le paramètre d'ajustement $\mu$ permet de contrôler un compromis entre l'efficacité du lissage aléatoire et celle du filtre particulaire. En effet, l'efficacité du filtre particulaire résulte d'une continuité des trajectoires possibles pour le système, décrites par ceux des intervalles d'état qui sont maintenus lors de plusieurs exécutions successives de la séquence des étapes /1/ à /5/. A contrario, le lissage aléatoire produit un brouillage de ces trajectoires. La valeur du

paramètre μ peut être fixée initialement pour le procédé à exécuter par l'unité de calcul 3. Elle dépend notamment des nombres N et d. Par exemple, le paramètre d'ajustement μ peut être pris égal à 0,1. L'utilisation du paramètre d'ajustement μ est notamment décrite dans la thèse de Merlinge, N., intitulée «State estimation and trajectory planning using box particule kernels», Université Paris-Saclay, 2018.

Les modifications aléatoires à appliquer à l'intervalle d'état boîte_i sont alors $h \cdot \varepsilon_{k,i}$, où k repère les bornes de coordonnées d'état, ou bien les valeurs centrales ou longueurs d'intervalles de coordonnées d'état. Ces modifications peuvent être disposées sous forme d'un vecteur $E_i$, tel que $E_i = [h \cdot \varepsilon_{k,i}]_{k=1,...,d'}$.

On décrit maintenant une méthode possible pour appliquer les modifications aléatoires aux intervalles d'état tels que résultant de la sous-étape /5-3/.

Pour cela, on peut représenter chaque intervalle d'état boîte_i par un vecteur $\Xi_i$ de hauteur d', dont les coordonnées regroupent les bornes de tous les intervalles unidimensionnels de coordonnées d'état pour cet intervalle d'état, ou bien les valeurs centrales et les longueurs de ses intervalles unidimensionnels. Alors, les valeurs modifiées aléatoirement du vecteur $\Xi_i$ peuvent être obtenues en remplaçant ce vecteur $\Xi_i$ par $\Xi_i + D \times E_i$, où D est une matrice carrée de dimension d' telle que le produit de D par la transposée de D soit égal à $\Sigma_{i=1}$ à $_N \Xi_i \cdot w_i \cdot {}^t\Xi_i$ : $D \times {}^tD = \Sigma_{i=1}$ à $_N \Xi_i \cdot w_i \cdot {}^t\Xi_i$, où $w_i$ est la valeur de poids de l'intervalle d'état boîte_i. Par exemple, la matrice D peut être déterminée par la méthode de Cholesky, qui est bien connue de l'Homme du métier de sorte qu'il n'est pas nécessaire de la décrire à nouveau ici. Dans ces conditions, le vecteur $\Xi_i$ est à remplacer par le vecteur $\Xi_i + D \times E_i$, pour appliquer les variations aléatoires selon le noyau d'Epanechnikov aux intervalles unidimensionnels de coordonnées d'état de l'intervalle d'état boîte_i. L'ensemble des vecteurs $\Xi_i + D \times E_i$ déterminent tous les nouveaux intervalles d'état qui résultent de la modification par lissage. Dans la partie générale de la présente description, la matrice $\Sigma_{i=1}$ à $_N \Xi_i \cdot w_i \cdot {}^t\Xi_i$, carrée de dimension d', a été appelée matrice moyenne de produits. Ses coefficients sont les valeurs moyennes calculées sur tous les intervalles d'état considérés, de produits de bornes d'intervalles, ou valeurs centrales et longueurs d'intervalles, prises par paires séparément pour chaque intervalle d'état.

La méthode qui vient d'être décrite pour appliquer, à la sous-étape /5-4/, un lissage par noyau d'Epanechnikov aux sous-intervalles tels qu'ils résultent de la sous-étape /5-3/, est mise en œuvre par l'unité de calcul 3 de la centrale de navigation à corrélation de mesure 10.

Les intervalles d'état mis-à-jour, tels que résultant de la sous-étape /5-3/ ou de la sous-étape /5-4/, avec leurs valeurs de poids associées, constituent le résultat du procédé de filtrage particulaire régularisé à boîtes pour une exécution de la séquence des étapes /1/ à /5/. Plusieurs itérations sont enchaînées de façon récurrente, chaque nouvelle itération à partir des résultats de l'itération précédente. L'itération qui est effectuée en dernier fournit une distribution de probabilité actualisée qui caractérise l'état vrai de l'aéronef 20. En outre, les intervalles d'état mis-à-jour qui en résultent, associés à leurs valeurs de poids respectives, sont à utiliser en tant qu'intervalles d'état antérieurs pour une nouvelle exécution de la séquence des étapes /1/ à /5/.

On décrit maintenant, en référence à [Fig. 4], une méthode de génération de chaque valeur aléatoire $\beta_i$, de façon à respecter la loi de distribution statistique Bêta(d, 2). Cette méthode correspond à l'algorithme de Cheng, publié dans l'article intitulé «Generating beta variates with non-integral shape parameters», Communications of the ACM, 21(4), pp. 317-322, 1978.

Pour cela, on détermine d'abord les nombres a et b suivants à l'étape /i/ :

a qui est égal à la valeur minimale entre d et 2 : a = min(d, 2), et
b qui est égal à la valeur maximale entre d et 2 : b = max(d, 2).

Pour la plupart des applications de l'invention, d est supérieur à 2, de sorte que a=2 et b=d. On calcule ensuite, à l'étape /ii/, les trois nombres $\alpha$, $\beta$ et $\gamma$ tels que :

$$\alpha = a + b, \text{ qui est égal à } d+2,$$

$$\beta = [(\alpha - 2)/(2 \cdot a \cdot b - \alpha)]^{1/2}, \text{ qui est égal à } [d/(3 \cdot d - 2)]^{1/2} ;$$

et

$$\gamma = a + 1/\beta.$$

Les nombres $\alpha$, $\beta$ et y peuvent avoir été pré-calculés et stockés pour être directement accessibles par l'unité de calcul 3.

A l'étape /iii/, deux nombres $u_1$ et $u_2$ sont générés aléatoirement chacun selon la loi uniforme de distribution statistique, entre 0 et 1, par exemple en utilisant une méthode de type LFSR. Puis les nombres V, W, Z, R et S sont calculés à l'étape /iv/, selon les formules suivantes :

$$V = \beta \cdot \log[u_1/(1-u_1)],$$

où log désigne la fonction logarithmique de base e,

$$W = a \cdot \exp(V),$$

où exp désigne la fonction exponentielle de base e,

$$Z = u_1^2 \cdot u_2,$$

$$R = \gamma \cdot V - \log(4),$$

et

$$S = a + R - W.$$

La valeur du nombre Z peut avantageusement être calculée chaque fois en appliquant le procédé de calcul d'une estimation de $X^\alpha$ qui a été décrit plus haut, à $X = u_1$ avec $\alpha = 2$. En outre, les valeurs des fonctions logarithme et exponentielle peuvent être obtenues à partir de tables de valeurs préenregistrées pour ces fonctions.

Les étapes /v/ à /viii/ sont alors effectuées successivement, en formant une séquence de tests qui sont appliqués en série :

étape /v/ : si $S + 1 + \log(5)$ est supérieur ou égal à $5 \cdot Z$, aller directement à l'étape /viii/ ;
étape /vi/ : si S est supérieur ou égal à $\log(Z)$, aller directement à l'étape /viii/ ;
étape /vii/ : si $R + \alpha \cdot \log[\alpha/(b+W)]$ est inférieur à $\log(Z)$, retourner à l'étape /iii/ ;
étape /viii/ : si a est égal à d, alors la valeur $\beta_i$ qui est générée aléatoirement selon la loi bêta de paramètres d et 2, est égale à $W/(b+W)$, et si a est différent de d, elle est égale à $b/(b+W)$. Pour la plupart des applications de l'invention, où d est supérieur à 2, la valeur aléatoire $\beta_i$ est égale à $d/(d+W)$.

Un des avantages de cet algorithme est que le nombre d'exécutions de la séquence des étapes /iii/ à /viii/ qui est nécessaire pour obtenir les N valeurs aléatoires $\beta_i$ est prédictible.

Il est entendu que l'invention peut être reproduite en modifiant des aspects secondaires des modes de mise en œuvre qui ont été décrits en détail ci-dessus, tout en conservant certains au moins des avantages cités. Parmi de telles modifications possibles, les suivantes sont citées de façon non-limitative :

- des algorithmes alternatifs peuvent être utilisés pour certaines étapes ou sous-étapes ;
- la centrale inertielle peut être utilisée comme source de mesure de l'état complet du véhicule. L'état du système tel que considéré pour l'invention comprend alors trois valeurs d'accélération et trois valeurs de vitesse angulaire, selon les trois coordonnées spatiales, en plus des trois valeurs de coordonnées spatiales qui identifient une position pour le véhicule, des trois valeurs de vitesses et des trois valeurs angulaires d'attitude. Dans ce cas, chaque état du système comprend des valeurs pour quinze coordonnées d'état ;
- à l'étape /1/, un modèle dynamique d'évolution d'état peut être utilisé pour le système, ce modèle pouvant tenir compte, lorsqu'il s'agit d'un véhicule, de commandes qui sont appliquées à un ou plusieurs moteur(s) et à un système de contrôle d'attitude du véhicule ; et
- l'unité de calcul peut être un processeur à structure ARM, un processeur à plusieurs cœurs de calcul, un ou plusieurs processeur(s) graphique(s), etc, à la place d'une puce de type FPGA, DSP, CPU ou RISC.

Enfin, l'invention peut être appliquée à d'autres domaines que l'aéronautique. Par exemple, un procédé de filtrage particulaire régularisé à boîtes qui est conforme à l'invention peut aussi être mis en œuvre pour un véhicule au sol, un navire maritime de surface, un sous-marin, un satellite ou une sonde spatiale, en utilisant à chaque fois un référentiel et des mesures d'état vrai qui sont appropriés.

**Revendications**

1. Procédé de filtrage particulaire régularisé à boîtes, pour prédire un état d'un système par un ensemble d'intervalles d'état avec des poids associés auxdits intervalles d'états, de façon à former une distribution de probabilité qui caractérise l'état du système, ledit système étant un véhicule (20) terrestre, aérien, maritime ou spatial qui est muni d'une centrale de navigation à corrélation de mesure (10),

   le procédé comprenant d'appliquer de façon répétitive une séquence d'étapes à l'ensemble d'intervalles d'état avec les poids associés pour actualiser les intervalles d'état et lesdits poids associés,
   la séquence d'étapes comprenant une étape dite de lissage, qui consiste à modifier au moins un des intervalles d'état en appliquant des modifications aléatoires à un ensemble de bornes d'intervalles, ou valeurs centrales et longueurs d'intervalles, qui déterminent l'intervalle d'état selon des coordonnées d'état du système, **caractérisé en ce que** les modifications aléatoires relatives à chaque intervalle d'état à modifier, qui est identifié par un indice entier i, sont déterminées en exécutant les étapes suivantes :

   - générer une première valeur aléatoire, notée $\beta_i$ et comprise entre 0 et 1, les valeurs 0 et 1 étant permises, selon une loi bêta de distribution statistique de premier paramètre égal à d et de second paramètre égal à 2, où d est un nombre des coordonnées d'état du système ;
   - générer 2·d secondes valeurs aléatoires, notées $v_{k,i}$, chacune selon une loi normale de distribution statistique à valeur moyenne nulle et écart-type égal à l'unité, où k est un autre indice entier qui varie de 1 à 2·d et repère les bornes d'intervalles, ou valeurs centrales et longueurs d'intervalles, pour chaque intervalle d'état ;
   - calculer un premier nombre, noté $\xi_i$, selon la première formule : $\xi_i = [\Sigma_{k=1 \text{ à } 2 \cdot d} (v_{k,i})2]^{1/2}$ ;
   - calculer un deuxième nombre, noté $\alpha_i$, selon la deuxième formule : $\alpha_i = \beta_i^{1/2}/\xi_i$ ; et
   - calculer 2·d troisièmes nombres, notés $\varepsilon_{k,i}$, selon la troisième formule : $\varepsilon_{k,i} = v_{k,i} \cdot \alpha_i$, et **en ce que** les modifications aléatoires qui sont appliquées à l'intervalle d'état i sont proportionnelles une-à-une aux troisièmes nombres $\varepsilon_{k,i}$, avec un coefficient de proportionnalité qui est non-nul et commun aux dites modifications aléatoires.

2. Procédé selon la revendication 1, suivant lequel l'ensemble des bornes d'intervalles, ou valeurs centrales et longueurs d'intervalles, qui déterminent l'intervalle d'état i est modifié en exécutant les étapes suivantes :

   - combiner les modifications aléatoires relatives audit intervalle d'état i en utilisant une matrice carrée de dimension 2·d, de façon à obtenir 2·d combinaisons de modifications aléatoires ; puis
   - ajouter lesdites combinaisons de modifications aléatoires une-à-une aux bornes d'intervalles, ou valeurs centrales et longueurs d'intervalles, de l'intervalle d'état i.

3. Procédé selon la revendication 2, suivant lequel la matrice qui est utilisée pour combiner les modifications aléatoires est telle que le produit de ladite matrice par une transposée de ladite matrice soit égal à une matrice moyenne de produits, ladite matrice moyenne de produits étant carrée de dimension 2·d, et ayant pour coefficients des valeurs moyennes calculées sur tous les intervalles d'état, de produits des bornes d'intervalles, ou valeurs centrales et longueurs d'intervalles, prises par paires séparément pour chaque intervalle d'état.

4. Procédé selon l'une quelconque des revendications précédentes, suivant lequel chaque première valeur aléatoire $\beta_i$ est générée en utilisant un algorithme qui combine :

   - une génération de deux nombres aléatoires chacun selon une loi uniforme de distribution statistique ; et
   - au moins un critère d'acceptation qui est basé sur les deux nombres aléatoires, tel que, si ledit au moins un critère d'acceptation est satisfait, un premier des deux nombres aléatoires est utilisé pour calculer la première valeur $\beta_i$, sinon la génération des deux nombres aléatoires est recommencée.

5. Procédé selon la revendication 4, suivant lequel chacun des deux nombres aléatoires est généré en utilisant une méthode de type à registre à décalage avec rétroaction linéaire.

6. Procédé selon l'une quelconque des revendications précédentes, suivant lequel chaque seconde valeur aléatoire $v_{k,i}$ est calculée comme une somme de plusieurs valeurs aléatoires initiales, chacune desdites valeurs aléatoires initiales étant générée selon une loi uniforme de distribution statistique.

**7.** Procédé selon l'une quelconque des revendications précédentes, suivant lequel des estimations respectives de chaque premier nombre $\xi_i$ et de chaque second nombre $\alpha_i$ sont obtenues en utilisant au moins une fois les étapes suivantes, où X est un nombre variable positif ou nul et $\alpha$ est une valeur d'exposant égale à 2 ou 1/2 :

/a/ écrire le nombre X sous une forme $X = (1+m)\cdot 2^{ex}$, où ex est un nombre entier négatif, positif ou nul, et m est une mantisse comprise entre 0 et 1, la valeur 0 et étant permise, de sorte qu'une représentation binaire du nombre X soit :

$I(X) = L\cdot(m + ex + B)$, où $L=2^1$ avec n qui est un nombre de bits d'une écriture binaire de la mantisse m, et B est un nombre constant positif ou nul, appelé biais ;

/b/ calculer une représentation binaire de $X^\alpha$ sous la forme :

$I(X^9) = \alpha\cdot I(X) + L\cdot(1 - \alpha)\cdot(B - \sigma)$, où $\sigma$ est un nombre constant dont la valeur est enregistrée ; et

/c/ obtenir l'estimation de la valeur de $X^\alpha$ à partir de la représentation binaire $I(X^\alpha)$, les étapes /a/-/c/ étant appliquées à $X = \Sigma_{k=1}$ à $_{2\cdot d}\, (v_{k,i})^2$ avec $\alpha=1/2$, pour obtenir une estimation du premier nombre $\xi_i$ ;

les étapes /a/-/c/ étant optionnellement appliquées préalablement à une valeur absolue de chaque seconde valeur aléatoire, selon $X = |v_{k,i}|$, avec $\alpha=2$ ; et

les étapes /a/-/c/ étant appliquées à $X = \beta_i$ avec $\alpha=1/2$, pour obtenir une estimation du deuxième nombre $\alpha_i$ comme un résultat d'une division de l'estimation de $\beta_i^{1/2}$ par l'estimation du premier nombre $\xi_i$.

**8.** Procédé selon la revendication 7, suivant lequel l'obtention de l'estimation de la valeur de $X^\alpha$ est complétée en exécutant au moins une fois l'étape supplémentaire suivante, après l'étape /c/ :

/d/ calculer une nouvelle estimation de la valeur de $X^\alpha$ à partir d'une estimation antérieure de la valeur de $X^\alpha$, en appliquant un algorithme récursif de résolution approchée d'équation à l'équation $Y^{1/\alpha} - X = 0$ d'inconnue Y, l'estimation de la valeur de $X^\alpha$ qui a été obtenue à l'étape /c/ étant utilisée comme estimation antérieure pour une première application dudit algorithme, et la nouvelle estimation de la valeur de $X^\alpha$ qui est produite par une q$^{ième}$ application de l'algorithme formant l'estimation antérieure de la valeur de $X^\alpha$ pour la $(q+1)^{ième}$ application dudit algorithme, si une telle $(q+1)^{ième}$ application de l'algorithme est effectuée, q étant un nombre entier supérieur ou égal à 1.

**9.** Procédé selon l'une quelconque des revendications précédentes, suivant lequel la séquence d'étapes qui est appliquée de façon répétitive pour actualiser les intervalles d'état avec les poids associés auxdits intervalles d'états, comprend les étapes /1/ à /5/ suivantes :

/1/ une étape de prédiction, comprenant de prédire des intervalles d'état ultérieurs, chaque intervalle d'état ultérieur étant obtenu en appliquant au moins une règle de propagation à un d'une pluralité d'intervalles d'état antérieurs ;

/2/ une étape de mesure d'un état vrai du système ;

/3/ une étape de contraction de l'un au moins des intervalles d'état ultérieurs, en fonction d'au moins un résultat de mesure de l'état vrai qui a été obtenu à l'étape /2/ ;

/4/ une étape de mise-à-jour de poids, comprenant d'affecter un poids à chaque intervalle d'état ultérieur en fonction d'une taille dudit intervalle d'état ultérieur tel que résultant de l'étape /3/, d'une taille dudit intervalle d'état ultérieur tel que résultant de l'étape /1/ avant l'étape /3/, et d'un poids de l'intervalle d'état antérieur dont a résulté ledit intervalle d'état ultérieur lors de l'étape /1/ ; et

/5/ une étape de redistribution des intervalles d'état, comprenant de remplacer au moins un des intervalles d'état ultérieurs par plusieurs sous-intervalles qui résultent d'une division de l'intervalle d'état ultérieur, chaque sous-intervalle formant un nouvel intervalle d'état, ladite étape de redistribution comprenant d'appliquer l'étape de lissage au moins à chaque nouvel intervalle d'état,

les intervalles d'état tels que résultant d'une exécution de la séquence des étapes /1/-/5/, comprenant les nouveaux intervalles d'état et des intervalles d'état ultérieurs qui ont été maintenus sans être remplacés par plusieurs nouveaux intervalles d'état, étant destinés à constituer les intervalles d'état antérieurs pour une exécution suivante de ladite séquence des étapes /1/ à /5/.

**10.** Unité de calcul (3), comprenant au moins une première entrée adaptée pour recevoir des résultats de mesures répétées d'accélération et de vitesse angulaire d'un système, et une seconde entrée adaptée pour recevoir des résultats de mesures répétées d'un état vrai du système, supplémentaires par rapport aux mesures d'accélération et de vitesse angulaire, et l'unité de calcul étant agencée pour exécuter un procédé de filtrage particulaire régularisé à boîtes qui est conforme à l'une quelconque des revendications précédentes, de façon à produire en sortie une série d'intervalles d'état avec des poids respectifs, le poids qui est associé à chacun des intervalles d'état correspondant à une valeur de probabilité pour que l'état vrai du système soit dans ledit intervalle d'état.

11. Unité de calcul (3) selon la revendication 10, de type circuit à réseau de portes programmables, circuit à réseau de portes fixes, ou processeur d'unité centrale.

12. Centrale de navigation à corrélation de mesure (10), adaptée pour être embarquée à bord d'un véhicule (20), comprenant :

- une centrale inertielle (1), adaptée pour mesurer itérativement des accélérations et des vitesses angulaires du véhicule (20), et pour déduire en utilisant des résultats de mesures des accélérations et des vitesses angulaires, des intervalles d'état ultérieurs respectivement à partir de plusieurs intervalles d'état antérieurs, chaque état du véhicule comprenant des coordonnées de position, de vitesse et d'attitude dudit véhicule ;
- un système de mesure (2), adapté pour mesurer itérativement au moins une caractéristique d'un état vrai du véhicule (20) ; et
- une unité de calcul (3) conforme à la revendication 10 ou 11, et adaptée pour réduire au moins une dérive de la centrale inertielle (1), parmi une dérive de position, une dérive de vitesse et une dérive d'attitude, en utilisant des résultats de mesure de la caractéristique de l'état vrai du véhicule (20) qui sont délivrés par le système de mesure (2).

13. Véhicule (20), comprenant une centrale de navigation à corrélation de mesure (10) qui est conforme à la revendication 12.

**Patentansprüche**

1. Verfahren zur kastenregularisierten Partikelfilterung, um einen Zustand eines Systems durch eine Reihe von Zustandsintervallen mit Gewichten zu prognostizieren, die mit den Zustandsintervallen verbunden sind, so dass eine Wahrscheinlichkeitsverteilung gebildet wird, die den Zustand des Systems charakterisiert, wobei das System ein Land-, Luft-, See- oder Raumfahrzeug (20) ist, das mit einer Navigationszentrale mit Messkorrelation (10) ausgestattet ist,

Verfahren, umfassend das wiederholte Anwenden einer Schrittfolge auf den Satz von Zustandsintervallen mit den zugehörigen Gewichten, um die Zustandsintervalle und die zugehörigen Gewichte zu aktualisieren,
wobei die Schrittfolge einen Glättungsschritt umfasst, der darin besteht, mindestens eines der Zustandsintervalle zu ändern, indem zufällige Änderungen auf eine Reihe von Intervallgrenzen oder mittleren Werten und Intervalllängen angewendet werden, die das Zustandsintervall gemäß Zustandskoordinaten des Systems bestimmen,
**dadurch gekennzeichnet, dass** die zufälligen Änderungen in Bezug auf jedes zu ändernde Zustandsintervall, das durch einen ganzzahligen Index i identifiziert wird, durch Ausführen der folgenden Schritte bestimmt werden:

- Erzeugen eines ersten Zufallswerts, der mit $\beta_i$ bezeichnet wird und zwischen 0 und 1 liegt, wobei die Werte 0 und 1 zulässig sind, gemäß eines einheitlichen statistischen Beta-Verteilungsgesetzes mit einem ersten Parameter gleich d und einem zweiten Parameter gleich 2, wobei d eine Zahl der Zustandskoordinaten des Systems ist;
- Erzeugen von 2·d zweiten Zufallswerten, bezeichnet als $v_{k,i}$, jeweils gemäß einem einheitlichen statistischen Verteilungsgesetz mit Mittelwert Null und Standardabweichung gleich Eins, wobei k ein weiterer ganzzahliger Index ist, der von 1 bis 2·d variiert und die Intervallgrenzen oder Mittelwerte und Intervalllängen für jedes Zustandsintervall kennzeichnet;
- Berechnen einer ersten Zahl mit der Bezeichnung $\xi_i$ nach der ersten Formel: $\xi_i = [\Sigma_{k=1 \text{ bis } 2\cdot d} (v_{k,i})^2]^{1/2}$;
- Berechnen einer zweiten Zahl mit der Bezeichnung $\alpha_i$, nach der zweiten Formel: $\alpha_i = \beta_i^{1/2}/\xi_i$; und
- Berechnen von 2·d dritten Zahlen mit der Bezeichnung $\varepsilon_{k,i}$ nach der dritten Formel: $\varepsilon_{k,i} = v_{k,i}\cdot\alpha_i$, und, dass die zufälligen Änderungen, die auf das Zustandsintervall i angewendet werden, eins zu eins proportional zu den dritten Zahlen $\varepsilon_{k,i}$ sind, mit einem Proportionalitätskoeffizienten, der nicht null ist und den zufälligen Änderungen gemeinsam ist.

2. Verfahren nach Anspruch 1, nach dem die Gesamtheit der Intervallgrenzen, oder Mittelwerte und Intervalllängen, die das Zustandsintervall i bestimmen, durch Ausführen folgender Schritte geändert wird:

- Kombinieren der zufälligen Änderungen in Bezug auf dieses Zustandsintervall i unter Verwendung einer quadratischen Matrix der Größe 2·d, um 2·d Kombinationen von zufälligen Änderungen zu erhalten; anschließend
- Hinzufügen der Kombinationen von zufälligen Änderungen einzeln zu den Intervallgrenzen oder mittleren Werten und Intervalllängen des Zustandsintervalls i.

3. Verfahren nach Anspruch 2, wonach die Matrix, die zur Kombination der zufälligen Änderungen verwendet wird, so ist, dass das Produkt der Matrix durch eine Transposition der Matrix einer durchschnittlichen Produktmatrix gleich ist, wobei die durchschnittliche Produktmatrix eine quadratische Größe von 2·d besitzt und als Koeffizienten Mittelwerte aufweist, die über alle Zustandsintervalle, Produkte von Intervallgrenzen oder Mittelwerte und Intervalllängen berechnet werden, paarweise getrennt für jedes Zustandsintervall.

4. Verfahren nach einem der vorhergehenden Ansprüche, wobei jeder erste Zufallswert $\beta_i$ unter Verwendung eines Algorithmus erzeugt wird, der Folgendes kombiniert:

   - eine Erzeugung von zwei Zufallszahlen jeweils nach einem einheitlichen Gesetz der statistischen Verteilung; und
   - mindestens ein Akzeptanzkriterium, das auf den beiden Zufallszahlen basiert, so dass, wenn das mindestens eine Akzeptanzkriterium erfüllt ist, eine erste der beiden Zufallszahlen zur Berechnung des ersten Wertes $\beta_i$ verwendet wird, andernfalls wird die Erzeugung der beiden Zufallszahlen erneut begonnen.

5. Verfahren nach Anspruch 4, wobei jede der beiden Zufallszahlen unter Verwendung eines Verfahrens des Offset-Registertyps mit linearer Rückkopplung erzeugt wird.

6. Verfahren nach einem der vorhergehenden Ansprüche, wonach jeder zweite Zufallswert $\nu_{k,i}$ als Summe mehrerer anfänglicher Zufallswerte berechnet wird, wobei jeder dieser anfänglichen Zufallswerte nach einem einheitlichen statistischen Verteilungsgesetz erzeugt wird.

7. Verfahren nach einem der vorhergehenden Ansprüche, wonach die jeweiligen Schätzungen jeder ersten Zahl $\xi_i$ und jeder zweiten Zahl $\alpha_i$ durch mindestens einmalige Verwendung der folgenden Schritte erhalten werden, wobei X eine positive variable Zahl oder Null ist und ein Exponentwert von 2 oder 1/2 $\alpha$ ist:

   /a/ Schreiben der Zahl X in einer Form $X = (1+m) \cdot 2^{ex}$, wobei ex eine negative, positive oder null ganze Zahl ist und m eine Mantisse zwischen 0 und 1 ist, wobei der Wert 0 erlaubt ist, so dass eine binäre Darstellung der Zahl X ist: $l(X) = L \cdot (m + ex + B)$, wobei $L = 2^n$ mit n eine Anzahl von Bits einer Binärschreibweise der Mantisse m ist, und B eine konstante positive oder null Zahl ist, die als Bias bezeichnet wird;
   /b/ Berechnen einer binären Darstellung von $X\alpha$ in folgender Form: $1(X\alpha) = \alpha \cdot l(X) + L \cdot (1 - a) \cdot (B - \sigma)$, wobei $\sigma$ eine konstante Zahl ist, deren Wert gespeichert wird; und
   /c/ Erhalten der Schätzung des Wertes von $X\alpha$ aus der binären Darstellung $l(X\alpha)$, wobei die Schritte /a/-/c/ auf $X = \Sigma_{k=1 \text{ bis } 2 \cdot d} (\nu_{k,i})^2$ mit $\alpha = 1/2$ angewendet werden, um eine Schätzung der ersten Zahl $\xi_i$ zu erhalten;
   wobei die Schritte /a/-/c/ optional vorher auf einen absoluten Wert jedes zweiten Zufallswerts angewendet werden, gemäß $X = |\nu_{k,i}|$, mit $\alpha = 2$; und
   wobei die Schritte /a/-/c/ auf $X = \beta_i$ mit $a = 1/2$ angewendet werden, um eine Schätzung der zweiten Zahl $\alpha_i$ als Ergebnis einer Division der Schätzung von $\beta_i^{1/2}$ durch die Schätzung der ersten Zahl $\xi_i$ zu erhalten.

8. Verfahren nach Anspruch 7, wobei das Erhalten der Schätzung des Werts von $X^a$ durch mindestens einmaliges Durchführen des folgenden zusätzlichen Schritts nach Schritt /c/ ergänzt wird:
   /d/ Berechnen einer neuen Schätzung des Werts von $X\alpha$ aus einer früheren Schätzung des Werts von $X\alpha$, indem ein rekursiver Algorithmus mit annähernder Auflösung der Gleichung auf die Gleichung $Y^{1/\alpha} - X = 0$ von unbekannt Y angewendet wird, wobei die Schätzung des Werts von $X\alpha$, die in Schritt /c/ erhalten wurde, als frühere Schätzung für eine erste Anwendung des Algorithmus verwendet wird, und die neue Schätzung des Werts von $X\alpha$, der durch eine q-te Anwendung des Algorithmus erzeugt wird, der die vorherige Schätzung des Werts von $X\alpha$ für die (q+1)-te des Algorithmus bildet, wenn eine solche (q+1)-te Anwendung des Algorithmus durchgeführt wird, wobei q eine ganze Zahl größer oder gleich 1 ist.

9. Verfahren nach einem der vorhergehenden Ansprüche, wobei die Schrittfolge, die wiederholt angewendet wird, um die Zustandsintervalle mit den Gewichten zu aktualisieren, die den Zustandsintervallen zugeordnet sind, die folgenden Schritte /1/ bis /5/ umfasst:

/1/ einen Vorhersageschritt, der das Vorhersagen von späteren Zustandsintervallen umfasst, wobei jedes spätere Zustandsintervall durch Anwenden mindestens einer Ausbreitungsregel auf eines von einer Vielzahl von früheren Zustandsintervallen erhalten wird;

/2/ einen Messschritt eines wahren Zustands des Systems;

/3/ einen Kontraktionsschritt von mindestens einem der späteren Zustandsintervalle, in Abhängigkeit von mindestens einem Messergebnis des wahren Zustands, das in Schritt /2/ erhalten worden ist;

/4/ einen Gewichtsaktualisierungsschritt, der das Zuweisen eines Gewichts zu jedem nachfolgenden Zustandsintervall in Abhängigkeit von einer Größe des nachfolgenden Zustandsintervalls, wie es sich aus Schritt /3/ ergibt, einer Größe des nachfolgenden Zustandsintervalls, wie es sich aus Schritt /1/ vor Schritt /3/ ergibt, und einem Gewicht des vorherigen Zustandsintervalls, aus dem sich das nachfolgende Zustandsintervall in Schritt /1/ ergeben hat, umfasst; und

/5/ einen Neuverteilungsschritt der Zustandsintervalle, der das Ersetzen von mindestens einem der nachfolgenden Zustandsintervalle durch mehrere Unterintervalle umfasst, die sich aus einer Teilung des nachfolgenden Zustandsintervalls ergeben, wobei jedes Unterintervall ein neues Zustandsintervall bildet, wobei der Neuverteilungsschritt das Anwenden des Glättungsschritts auf mindestens jedes neue Zustandsintervall umfasst,

wobei die Zustandsintervalle, wie sie sich aus einer Ausführung der Sequenz der Schritte /1/-/5/ ergeben, einschließlich der neuen Zustandsintervalle und späterer Zustandsintervalle, die beibehalten wurden, ohne durch mehrere neue Zustandsintervalle ersetzt zu werden, dazu bestimmt sind, die früheren Zustandsintervalle für eine nachfolgende Ausführung der Sequenz der Schritte /1/- /5/ zu bilden.

10. Recheneinheit (3), umfassend mindestens einen ersten Eingang, der geeignet ist, um Ergebnisse wiederholter Messungen von Beschleunigung und Winkelgeschwindigkeit eines Systems zu empfangen, und einen zweiten Eingang, der geeignet ist, um Ergebnisse wiederholter Messungen eines wahren Zustands des Systems, zusätzlich zu den Messungen von Beschleunigung und Winkelgeschwindigkeit zu empfangen, und die Recheneinheit angeordnet ist, um ein Verfahren zur feldgeregelten Teilchenfilterung auszuführen, das einem der vorstehenden Ansprüche entspricht, um am Ausgang eine Reihe von Zustandsintervallen mit jeweiligen Gewichtungen zu erzeugen, wobei die Gewichtung, die mit jedem der Zustandsintervalle verknüpft ist, einem Wahrscheinlichkeitswert entspricht, damit der wahre Zustand des Systems in dem Zustandsintervall liegt.

11. Recheneinheit (3) nach Anspruch 10, vom Typ programmierbare Gate-Netzwerkschaltung, feste Gate-Netzwerkschaltung oder CPU.

12. Navigationszentrale mit Messkorrelation (10), die geeignet ist, um an Bord eines Fahrzeugs (20) eingebaut zu werden, umfassend:

- eine Trägheitszentrale (1), die geeignet ist, um iterativ Beschleunigungen und Winkelgeschwindigkeiten des Fahrzeugs (20) zu messen und, um unter Verwendung der Messergebnisse der Beschleunigungen und Winkelgeschwindigkeiten jeweils aus mehreren früheren Zustandsintervallen spätere Zustandsintervalle abzuleiten, wobei jeder Zustand des Fahrzeugs Positions-, Geschwindigkeits- und Verhaltenskoordinaten des Fahrzeugs umfasst;

- ein Messsystem (2), das geeignet ist, um mindestens eine Eigenschaft eines wahren Zustands des Fahrzeugs (20) iterativ zu messen; und

- eine Recheneinheit (3) nach einem der Ansprüche 10 bis 11, und geeignet, um mindestens eine Abweichung der Trägheitszentrale (1) unter einer Positionsabweichung, einer Geschwindigkeitsabweichung und einer Verhaltensabweichung unter Verwendung der Messergebnisse der Eigenschaft des wahren Zustands des Fahrzeugs (20), die vom Messsystem (2) geliefert werden, zu reduzieren.

13. Fahrzeug (20), umfassend eine Navigationszentrale mit Messkorrelation (10) nach Anspruch 12.

**Claims**

1. A method for box regularised particle filtering, to predict a state of a system by a set of state intervals with weights associated with said state intervals, so as to form a probability distribution that characterises the state of the system, said system being a land, air, marine or space vehicle (20) which is provided with a navigation system using measurement correlation (10),

the method comprising repeatedly applying a sequence of steps to the set of state intervals with the associated weights to update the state intervals and said associated weights,

the sequence of steps comprising a step called smoothing step, which consists in changing at least one of the state intervals by applying random changes to a set of interval boundaries, or central values and interval lengths, which determine the state interval according to state coordinates of the system,

**characterised in that** the random changes relating to each state interval to be changed, which is identified by an integer index i, are determined by performing the following steps:

- generating a first random value, noted $\beta_i$ and comprised between 0 and 1, the values 0 and 1 being allowed, according to a statistical distribution beta law of first parameter equal to d and of second parameter equal to 2, where d is a number of the system state coordinates;
- generating $2 \cdot d$ second random values, noted $v_{k,i}$, each according to a normal statistical distribution law with zero mean value and standard deviation equal to the unit, where k is another integer index which varies from 1 to $2 \cdot d$ and marks the interval boundaries, or central values and interval lengths, for each state interval;
- calculating a first number, noted $\xi_i$, according to the first formula: $\xi_i = [\Sigma_{k=1 \text{ à } 2 \cdot d} (v_{k,i})^2]^{1/2}$;
- calculating a second number, noted $\alpha_i$, according to the second formula: $\alpha_i = \beta_i^{1/2}/\xi_i$; and
- calculating $2 \cdot d$ third numbers, noted $\varepsilon_{k,i}$, according to the third formula: $\varepsilon_{k,i} = v_{k,i} \cdot \alpha_i$, and **in that** the random changes which are applied to the state interval i are one-to-one proportional to the third numbers $\varepsilon_{k,i}$, with a proportionality coefficient which is non-zero and common to said random changes.

2. The method according to claim 1, according to which the set of interval boundaries, or central values and interval lengths, which determine the state interval i is changed by performing the following steps:

- combining the random changes relative to said state interval i using a square matrix of dimension $2 \cdot d$, so as to obtain $2 \cdot d$ combinations of random changes; then
- adding said combinations of random one-to-one changes to the interval boundaries, or central values and interval lengths, of the state interval i.

3. The method according to claim 2, according to which the matrix which is used to combine the random changes is such that the product of said matrix by a transposition of said matrix is equal to an average matrix of products, said average matrix of products being square in size $2 \cdot d$, and having as coefficients average values calculated over all state intervals, of products of the interval boundaries, or central values and interval lengths, taken in pairs separately for each state interval.

4. The method according to any one of the preceding claims, wherein each first random value $\beta_i$ is generated using an algorithm that combines:

- generating two random numbers each according to a uniform statistical distribution law; and
- at least one acceptance criterion that is based on the two random numbers, such that, if said at least one acceptance criterion is met, a first of the two random numbers is used to calculate the first value $\beta_i$, otherwise the generation of the two random numbers is repeated.

5. The method according to claim 4, wherein each of the two random numbers is generated using a linear feedback shift register type method.

6. The method according to any one of the preceding claims, wherein each second random value $v_{k,i}$ is calculated as a sum of several initial random values, each of said initial random values being generated according to a uniform statistical distribution law.

7. The method according to any one of the preceding claims, wherein respective estimates of each first number $\xi_i$ and each second number $\alpha_i$ are obtained using at least once the following steps, where X is a positive or zero variable number and $\alpha$ is an exponent value equal to 2 or 1/2:

/a/ writing the number X in a form $X = (1+m) \cdot 2^{ex}$, where ex is a negative, positive or zero integer, and m is a mantissa comprised between 0 and 1, the value 0 and being allowed, such that a binary representation of the number X is:
$l(X) = L \cdot (m + ex + B)$, where $L=2^n$ with n which is a number of bits of a binary writing of the mantissa m, and B is a positive or zero constant number, called bias;

/b/ calculating a binary representation of $X\alpha$ in the form:

$l(X\alpha) = \alpha \cdot l(X) + L \cdot (1 - a) \cdot (B - \sigma)$, where $\sigma$ is a constant number whose value is recorded; and

/c/ obtaining the estimate of the value of $X\alpha$ from the binary representation $l(X\alpha)$, the steps /a/-/c/ being applied to $\cdot X = \Sigma_{k=1 \text{ to } 2 \cdot d} (\nu_{k,i})^2$ with $\alpha=1/2$, to obtain an estimate of the first number $\xi_i$;

the steps /a/-/c/ being optionally applied prior to an absolute value of each second random value, according to $X = |\nu_{k,i}|$, with $\alpha=2$; and

the steps /a/-/c/ being applied to $X = \beta_i$ with $a=1/2$, to obtain an estimate of the second number $\alpha_i$ as a result of a division of the estimate of $\beta_i^{1/2}$ by the estimate of the first number $\xi_i$.

8. The method according to claim 7, wherein obtaining the estimate of the value of $X^a$ is completed by executing the following additional step at least once, after step /c/:

/d/ calculating a new estimate of the value of $X\alpha$ from a previous estimate of the value of $X\alpha$, $\alpha$, by applying a recursive algorithm for approximate equation solving to the equation $Y^{1/\alpha}-X=0$ of unknown Y, the estimate of the value of $X\alpha$ which was obtained in step /c/ being used as a previous estimate for a first application of said algorithm, and the new estimate of the value of $X\alpha$ which is produced by a $q^{th}$ application of the algorithm forming the previous estimate of the value of $X\alpha$ for the $(q+1)^{th}$ application of said algorithm, if such a $(q+1)^{th}$ application of the algorithm is performed, q being an integer which is greater than or equal to 1.

9. The method according to any one of the preceding claims, wherein the sequence of steps which is repeatedly applied to update the state intervals with the weights associated with said state intervals, comprises the following steps /1/ to /5/:

/1/ a prediction step, comprising predicting subsequent state intervals, each subsequent state interval being obtained by applying at least one propagation rule to one of a plurality of previous state intervals;

/2/ a step of measuring a true state of the system;

/3/ a step of contracting at least one of the subsequent state intervals, depending on at least one measurement result of the true state which was obtained in step /2/;

/4/ a weight updating step, comprising assigning a weight to each subsequent state interval depending on a size of said subsequent state interval as resulting from step /3/, a size of said subsequent state interval as resulting from step /1/ before step /3/, and a weight of the previous state interval from which said subsequent state interval resulted during step /1/; and

/5/ a step of redistributing the state intervals, comprising replacing at least one of the subsequent state intervals by several sub-intervals resulting from a division of the subsequent state interval, each sub-interval forming a new state interval, said redistribution step comprising applying the smoothing step at least to each new state interval,

the state intervals as resulting from an execution of the sequence of steps /1/-/5/, comprising the new state intervals and subsequent state intervals which have been maintained without being replaced by several new state intervals, being intended to constitute the previous state intervals for a subsequent execution of said sequence of steps /1/ to/5/.

10. A computing unit (3), comprising at least one first input adapted to receive results of repeated measurements of acceleration and angular speed of a system, and a second input adapted to receive results of repeated measurements of a true state of the system, additional relative to the acceleration and angular speed measurements, and the computing unit being arranged to execute a box regularised particle filtering method which is in accordance with any one of the preceding claims, so as to produce as output a series of state intervals with respective weights, the weight which is associated with each of the state intervals corresponding to a probability value for the true state of the system to be in said state interval.

11. The computing unit (3) according to claim 10, , of the type of a field-programmable gate array circuit, a fixed gate array circuit, or a central processing unit processor.

12. A navigation system using measurement correlation (10), adapted to be carried on board a vehicle (20), comprising:

- an inertial unit (1) adapted to iteratively measure accelerations and angular speeds of the vehicle (20), and to deduce, using results of measurements of the accelerations and angular speeds, subsequent state intervals respectively from several previous state intervals, each state of the vehicle comprising position, speed and attitude coordinates of said vehicle;

- a measurement system (2), adapted to iteratively measure at least one characteristic of a true state of the vehicle (20); and

- a computing unit (3) in accordance with claims 10 or 11, and adapted to reduce at least one drift of the inertial unit (1), from a position drift, a speed drift and an attitude drift, using results of measurement of the characteristic of the true state of the vehicle (20) which are delivered by the a measurement system (2).

13. A vehicle (20), comprising a measurement correlation navigation unit (10) which is in accordance with claim 12.

FIG. 1

boîte_i   pour i = 1 à N

/1/ : prédiction

/2/ : mesure → /3/ : contraction

/4/ : mise à jour du poids $w_i$

CR

/5-1/ : calcul de $n_i$

/5-2/ : détermination de la coordonnée de division de boîte_i

/5/ {

/5-3/ : division de boîte_i

/5-4/ : lissage

# FIG. 2

Génération de $\beta_i$, $i = 1, ..., N$

Génération de $\nu_{k,i}$, $k = 1, ..., 2 \cdot d$
$i = 1, ..., N$

Calcul de $\xi_i = \left[ \sum_{k=1}^{2 \cdot d} (\nu_{k,i})^2 \right]^{1/2}$

Calcul de $\alpha_i = \beta_i^{1/2} \Big/ \xi_i$

Calcul de $\varepsilon_{k,i} = \nu_{k,i} \cdot \alpha_i$

Détermination de $h$

Calcul de $P_{\Xi} = \sum_{i=1}^{N} \Xi_i \times \omega_i \times {}^t\Xi_i$

Calcul de $E_i = \begin{bmatrix} h \cdot \varepsilon_{1,i} \\ \vdots \\ h \cdot \varepsilon_{k,i} \\ \vdots \\ h \cdot \varepsilon_{2 \cdot d,i} \end{bmatrix}$

Calcul de $D$ telle que : $D \times {}^tD = P_{\Xi}$

Calcul de : $\Xi_i + D \times E_i$

## FIG. 3

FIG. 4

/i/ — $a = \min(d, 2)$
$b = \max(d, 2)$

/ii/ — $\alpha = a + b$

$$\beta = \left[ \frac{\alpha - 2}{2 \cdot a \cdot b - \alpha} \right]^{1/2}$$

$\gamma = a + 1/\beta$

/iii/ — $u_1, u_2$

/iv/ —

$$V = \beta \cdot \log \left[ \frac{u_1}{1 - u_1} \right]$$

$W = a \cdot \exp(V)$

$Z = u_1^2 \cdot u_2$

$R = \gamma \cdot V - \log(4)$

$S = a + R - W$

/v/ — $S + 1 + \log(5) \overset{?}{\geq} 5 \cdot Z$ — oui

non

/vi/ — $S \overset{?}{\geq} \log(Z)$ — oui

non

/vii/ — $R + \alpha \cdot \log \left[ \dfrac{\alpha}{b + W} \right] \overset{?}{<} \log(Z)$ — oui

non

/viii/ — $a \overset{?}{=} d$

non — $\beta_i = \dfrac{b}{b + W}$

oui — $\beta_i = \dfrac{W}{b + W}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MERLINGE, N.** ; **DAHIA, K.** ; **PIET-LAHANIER, H.** ; **BRUSEY, J.** ; **HORRI, N.** A Box Regularized Particle Filter for state estimation with severely ambiguous and non-linear measurements. *Automatica*, 2019, vol. 104, 102-110
- **MERLINGE et al.** *Automatica*, 2019, vol. 104
- **DE GNING, A.** ; **RISTIC, B.** ; **MIHAYLOVA, L** ; **ABDALLAH, F.** *IEEE Signal Processing Magazine*, 2013, vol. 30 (4), 166-171
- **DE MERLINGE, N.** ; **DAHIA, K.** ; **PIET-LAHANIER, H.** ; **BRUSEY, J.** ; **HORRI, N.** A Box Regularized Particle Filter for state estimation with severely ambiguous and non-linear measurements. *Automatica*, 2019, vol. 104, 102-110
- **MERLINGE, N.** State estimation and trajectory planning using box particule kernels. Université Paris-Saclay, 2018
- Generating beta variates with non-integral shape parameters. *Communications of the ACM*, 1978, vol. 21 (4), 317-322